(19) Europäisches Patentamt
European Patent Office
Office européen des brevets

(11) EP 4 286 422 A1

(12) EUROPEAN PATENT APPLICATION
published in accordance with Art. 153(4) EPC

(43) Date of publication:
**06.12.2023 Bulletin 2023/49**

(21) Application number: **22745763.7**

(22) Date of filing: **21.01.2022**

(51) International Patent Classification (IPC):
*C08F 8/00* (2006.01) *C09C 3/10* (2006.01)
*C09D 17/00* (2006.01) *C08F 4/00* (2006.01)
*C08L 33/00* (2006.01) *C09D 11/322* (2014.01)

(52) Cooperative Patent Classification (CPC):
**C08F 4/00; C08F 8/00; C08L 33/00; C09C 3/10; C09D 11/322; C09D 17/00**

(86) International application number:
**PCT/JP2022/002275**

(87) International publication number:
**WO 2022/163542 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2021 JP 2021013020**
**25.03.2021 JP 2021052024**

(71) Applicants:
- **NOF Corporation**
**Shibuya-ku**
**Tokyo 150-6019 (JP)**
- **National University Corporation**
**Yamagata University**
**Yamagata-shi, Yamagata 990-8560 (JP)**

(72) Inventors:
- **TAKAMURA Masumi**
**Chita-gun, Aichi 470-2373 (JP)**
- **TAKAHASHI Tatsuhiro**
**Yamagata-shi, Yamagata 990-8560 (JP)**
- **TAKAHASHI Shigeki**
**Yamagata-shi, Yamagata 990-8560 (JP)**
- **SAKAI Shinri**
**Yamagata-shi, Yamagata 990-8560 (JP)**

(74) Representative: **Mewburn Ellis LLP**
**Aurora Building**
**Counterslip**
**Bristol BS1 6BX (GB)**

(54) **LIVING RADICAL POLYMER, COMPOSITION, RESIN-COATED PIGMENT, AND METHOD FOR PRODUCING LIVING RADICAL POLYMER**

(57) An object of the present invention is to provide a living radical polymer that has a low molecular weight distribution and has a specific functional group at least at one end, and a resin-coated pigment that has high dispersibility of a resin composition comprising the living radical polymer, is excellent in properties such as preservation stability, discharge stability, and color developability in a dispersed state, and is suitably used in a pigment dispersion. The object mentioned above has been attained by the following: a living radical polymer having a specific functional group structure, the living radical polymer comprising a polymerization initiator-derived specific organic compound moiety at one end or in a backbone of the living radical polymer and being obtained by reacting a radical generator having a specific functional group with at least any end, for example, an iodine end ascribable to a precursor; a living radical polymer composition comprising the same; a resin-coated pigment obtained by coating with the living radical polymer composition; and a method for producing the living radical polymer having a specific functional group structure.

EP 4 286 422 A1

## Description

TECHNICAL FIELD

The present invention relates to a living radical polymer that has a narrow molecular weight distribution and has a specific functional group at least at one polymer end, a composition thereof, a resin-coated pigment, and a method for producing the living radical polymer, etc.

BACKGROUND ART

Living radical polymerization is breakthrough polymerization that can solve a nonuniform molecular weight which is a disadvantage of radical polymerization while exploiting convenience and general-purpose versatility which are advantages thereof. In the living radical polymerization method, a polymer is obtained using a polymerization initiator that is constituted by a dormant species and an organic compound moiety and generates a polymerization active end, and a radical polymerizable unsaturated monomer in the presence of a catalyst, and the organic compound moiety and the dormant species in the polymerization initiator are bonded to the ends, respectively, of the polymer (hereinafter, also referred to as a precursor). Hence, the precursor is polymerized by the addition of a new radical polymerizable monomer to obtain each copolymer having distinctive components (a block copolymer having a block-like bond, a graft copolymer having a ramiform bond, a star copolymer having a star-shaped bond, a ladder copolymer having a ladder-like bond, etc.). The primary structure of such a copolymer having a distinctive bonded state largely influences the chemical properties or physical properties of the polymer. Therefore, the living radical polymerization is a technique that is important both academically and industrially.

However, the dormant species at the resulting precursor end contains sulfide, halogen, or a transition metal, etc., and therefore has disadvantages such as odor, corrosiveness, toxicity, and staining properties and has many limitations on development for various purposes. Hence, it is necessary to remove the dormant species at the obtained precursor end.

On the other hand, a new function can be exerted by bonding a functional group to a precursor end, for example, by segregating the functional group to near thin film surface, reacting the functional group with another polymer, or adsorbing or reacting the functional group with the surface of organic or inorganic particles.

The precursor having a functional group bonded to an end includes two polymers: (1) a polymer in which an organic compound moiety of a polymerization initiator containing the functional group in advance is bonded to a precursor end; and (II) a polymer in which a new functional group is bonded to a precursor end using a functional group-containing compound while a dormant species at the end is eliminated. The polymer (I) mentioned above is not favorable from a safety standpoint such as toxicity as mentioned above because a dormant species end exists at one end of the polymer.

For example, Patent Literature 1 describes a living radical polymer bonded to a hydrolyzable silyl group via nitrogen and sulfur as the polymer (II). Non Patent Literature 1 describes a polymer in which a hydroxy group, a thiol group, or an alkoxysilyl group is bonded to a precursor via nitrogen. However, a problem of the polymers obtained in these literatures is that the desired chemical structure cannot be bonded due to deterioration ascribable to side reaction.

Meanwhile, a living radical polymer has the advantage that the living radical polymer is uniformly adsorbed or reacted with, particularly, a pigment, and can secure uniform steric repulsion, because of a uniform molecular weight distribution. In recent years, such a living radical polymer has been very useful as a pigment dispersant which disperses a pigment of nanometer (nm) size for forming high-quality images in ink compositions.

An ink composition is obtained by first preparing a pigment dispersion liquid containing a pigment with a small particle size uniformly dispersed and stabilized in a solvent in advance, and adding a binder resin or the like for fixation to a base material such as paper or a plastic sheet to the pigment dispersion liquid.

Examples of the pigment dispersion liquid include nonaqueous pigment dispersion liquids for use in solvent-based or ultraviolet (UV)-curable ink compositions (Patent Literature 2), and aqueous pigment dispersion liquids (Patent Literatures 3 and 4) for use in aqueous ink compositions.

Conventional pigment dispersion liquids have been found to have a tendency to easily aggregate primary pigment particles in association with decrease in pigment particle size mentioned above or reduction in viscosity of an ink composition associated with high-speed printing. Therefore, it has been desired to accomplish a pigment dispersion excellent in properties necessary for ink compositions, such as pigment dispersibility, preservation stability, discharge stability, and color developability.

PRIOR ART DOCUMENTS

PATENT DOCUMENTS

Patent Literature 1: Japanese Patent Laid-Open No. 2011-74325
Patent Literature 2: Japanese Patent Laid-Open No. 2013-064092
Patent Literature 3: Japanese Patent Laid-Open No. 2011-225834
Patent Literature 4: Japanese Patent Laid-Open No. 2016-160308

NON PATENT DOCUMENTS

Non Patent Literature 1: Macromolecules, (USA), 2016, No. 49, p. 9425-9940

SUMMARY OF THE INVENTION

PROBLEMS TO BE SOLVED BY THE INVENTION

The present invention has been made in light of the problems of the conventional techniques mentioned above, and provides a living radical polymer that has a narrow molecular weight distribution and has a specific functional group at least at one end, a composition comprising the living radical polymer, a resin-coated pigment comprising the living radical polymer, and a method for producing the living radical polymer.

The present invention also provides, for example, a resin-coated pigment that has high pigment dispersibility of a pigment dispersion, is excellent in properties, such as preservation stability, discharge stability, and color developability, of an ink composition containing a binder resin in the pigment dispersion, and is suitably used in a pigment dispersion.

MEANS FOR SOLVING THE PROBLEMS

The present invention includes those described below.

[1] A living radical polymer comprising a polymerization initiator-derived organic compound moiety at one end or in a backbone of the living radical polymer, wherein

at least at any end, a terminal functional group structure represented by the following formula (1) or formula (2) is bonded to the backbone directly or via an ester moiety:

[Chem. 1]

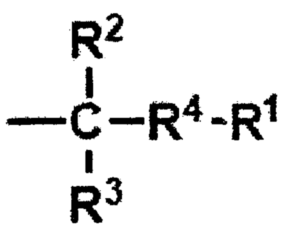

(1)

wherein
$R^1$ is at least one functional group selected from a carboxyl group, a hydroxy group, and an amino group,
$R^2$ and $R^3$ are each independently at least one group selected from hydrogen, a $C_{1-3}$ alkyl group, and a cyano group, and
$R^4$ is a $C_{1-3}$ alkylene group, an imino group, a N-alkylenecarboxylic acid amide moiety, or a N-alkylene amidine moiety
[in the living radical polymer, the polymer backbone is located on the left side of C in the formula (1), and the bond on the left side of C in the formula (1) represents a linking moiety with the backbone],

[Chem. 2]

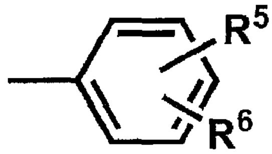

(2)

wherein
$R^5$ is at least one functional group selected from a carboxyl group, a hydroxy group, and an amino group, and
$R^6$ is one or two groups each independently selected from hydrogen, a $C_{1-3}$ alkyl group, and a $C_{1-3}$ alkoxy group [in the living radical polymer, the polymer backbone is located on the left side of the benzene ring in the formula (2), and the bond on the left side of the benzene ring in the formula (2) represents a linking moiety with the backbone].

[1-1] The living radical polymer according to [1], wherein in the terminal functional group structure represented by the formula (1),

$R^1$ is a carboxyl group or a hydroxy group,
$R^2$ and $R^3$ are each independently selected from hydrogen, a cyano group, and a methyl group, and
$R^4$ is a methylene group, an imino group, a N-alkylenecarboxylic acid amide moiety, or a N-alkylene amidine moiety.

[1-2] The living radical polymer according to [1] or [1-1], wherein in the terminal functional group structure represented by the formula (2),

$R^5$ is a carboxyl group or a hydroxy group, and
$R^6$ is hydrogen or a methoxy group.

[1-3] The living radical polymer according to any of [1], [1-1], and [1-2], wherein an ester moiety derived from carboxylic acid ethyl ester is bonded.
[1-4] The living radical polymer according to any of [1] and [1-1] to [1-3], wherein a molecular weight distribution value is 1.0 to 1.5.

[2] The living radical polymer according to [1], wherein the terminal functional group structure represented by the formula (1) or the formula (2) is bonded to the backbone via the ester moiety.
[3] The living radical polymer according to [1] or [2], wherein the living radical polymer comprises an organic compound moiety derived from an organic iodine compound as the polymerization initiator.
[4a] A living radical polymer composition comprising the living radical polymer according to any of [1] to [3] and a living radical polymer free of the terminal functional group structure, wherein the living radical polymer according to any of [1] to [3] is contained at a ratio of 50 parts by weight or more to 100 parts by weight in total of the living radical polymers.
[4b] A resin composition for pigment coating, comprising

the living radical polymer according to any of [1] to [3],
the living radical polymer comprising a polymerization initiator-derived organic compound moiety at one end or in a backbone, wherein
at least at any end of the living radical polymer, a terminal functional group structure represented by the formula (1) or the formula (2) is bonded to the backbone directly or via an ester moiety.

[4-1] The composition according to [4a] or [4b], wherein the living radical polymer is a diblock copolymer comprising a hydrophilic block (A) comprising at least any one of a (meth)acrylic (co)polymer, a styrenic (co)polymer, and an aminic (co)polymer, and a hydrophobic block (B).
[4-2] The composition according to any of [4a], [4b], and [4-1], wherein the living radical polymer is an A-B-A type triblock copolymer that has the terminal functional group structure represented by the formula (1) or the formula (2) at both ends, and comprises a hydrophilic block (A) comprising at least any one of a (meth)acrylic

(co)polymer, a styrenic (co)polymer, and an aminic (co)polymer, and a hydrophobic block (B).
[4-3] The composition according to any of [4a], [4b], [4-1], and [4-2], wherein the hydrophilic block (A) is a (co)polymer comprising at least any one of a (meth)acrylate (co)polymer, a styrenic (co)polymer, and an aminic (co)polymer having a constituent unit derived from the same functional group as $R^1$ in the formula (1) or $R^5$ in the formula (2).
[4-4] The composition according to any of [4a], [4b], and [4-1] to [4-3], wherein in the terminal functional group structure represented by the formula (1),

$R^1$ is a carboxyl group or a hydroxy group,
$R^2$ and $R^3$ are each independently selected from hydrogen, a cyano group, and a methyl group, and
$R^4$ is a methylene group, an imino group, a N-alkylenecarboxylic acid amide moiety, or a N-alkylene amidine moiety.

[4-5] The composition according to any of [4a], [4b], and [4-1] to [4-4], wherein in the terminal functional group structure represented by the formula (2),

$R^5$ is a carboxyl group or a hydroxy group, and
$R^6$ is hydrogen or a methoxy group.

[4-6] The composition according to any of [4a], [4b], and [4-1] to [4-5], wherein the terminal functional group structure represented by the formula (1) or the formula (2) is bonded to the backbone via the ester moiety.
[4-7] The composition according to any of [4a], [4b], and [4-1] to [4-6], wherein an ester moiety derived from carboxylic acid ethyl ester is bonded.
[4-8] The composition according to any of [4a], [4b], and [4-1] to [4-7], wherein the composition comprises an organic compound moiety derived from an organic iodine compound as the polymerization initiator.
[4-9] The composition according to any of [4a], [4b], and [4-1] to [4-8], wherein the living radical polymer has a number-average molecular weight of 1,000 to 50,000 and a molecular weight distribution value of 1.0 to 1.5.

[5] A resin-coated pigment in which at least a portion of the surface is coated with a composition comprising the living radical polymer according to any of [1] to [3].

[5-1] The resin-coated pigment according to [5], wherein the pigment comprises an amine-modified pigment, and the terminal functional group structure represented by the formula (1) or the formula (2) in the living radical polymer comprises at least a carboxyl group.
[5-2] The resin-coated pigment according to [5] or [5-1], wherein the pigment comprises a sulfonic acid-modified pigment, and the terminal functional group structure represented by the formula (1) or the formula (2) in the living radical polymer comprises at least an amino group.
[5-3] The resin-coated pigment according to any of [5], [5-1], and [5-2], wherein in the resin composition, the living radical polymer having the specific terminal functional group structure represented by the formula (1) or the formula (2) is contained at a ratio of 50 parts by weight or more to 100 parts by weight in total of the living radical polymers.
[5-4] The resin-coated pigment according to any of [5] and [5-1] to [5-3], wherein in the terminal functional group structure represented by the formula (1),

$R^1$ is a carboxyl group or a hydroxy group,
$R^2$ and $R^3$ are each independently selected from hydrogen, a cyano group, and a methyl group, and
$R^4$ is a methylene group, an imino group, a N-alkylenecarboxylic acid amide moiety, or a N-alkylene amidine moiety.

[5-5] The resin-coated pigment according to any of [5] and [5-1] to [5-4], wherein in the terminal functional group structure represented by the formula (2),

$R^5$ is a carboxyl group or a hydroxy group, and
$R^6$ is hydrogen or a methoxy group.

[5-6] The resin-coated pigment according to any of [5] and [5-1] to [5-5], wherein the terminal functional group structure represented by the formula (1) or the formula (2) is bonded to the backbone via the ester moiety.
[5-7] The resin-coated pigment according to any of [5] and [5-1] to [5-6], wherein an ester moiety derived from

carboxylic acid ethyl ester is bonded.

[5-8] The resin-coated pigment according to any of [5] and [5-1] to [5-7], wherein the resin-coated pigment comprises an organic compound moiety derived from an organic iodine compound as the polymerization initiator.

[6] The resin-coated pigment according to [5], wherein the living radical polymer is a diblock copolymer comprising a hydrophilic block (A) comprising at least any one of a (meth)acrylic (co)polymer, a styrenic (co)polymer, and an aminic (co)polymer, and a hydrophobic block (B).

[7] The resin-coated pigment according to [5] or [6], wherein the living radical polymer is an A-B-A type triblock copolymer that has the terminal functional group structure represented by the formula (1) or the formula (2) at both ends, and comprises a hydrophilic block (A) comprising at least any one of a (meth)acrylic (co)polymer, a styrenic (co)polymer, and an aminic (co)polymer, and a hydrophobic block (B).

[8] The resin-coated pigment according to [6] or [7], wherein the hydrophilic block (A) is a (co)polymer comprising at least any one of a (meth)acrylate (co)polymer, a styrenic (co)polymer, and an aminic (co)polymer having a constituent unit derived from the same functional group as $R^1$ in the formula (1) or $R^5$ in the formula (2).

[9] The resin-coated pigment according to any of [5] to [8], wherein the living radical polymer has a number-average molecular weight of 1,000 to 50,000 and a molecular weight distribution value of 1.0 to 1.5.

[10] A resin-coated pigment dispersion comprising the resin-coated pigment according to any of [5] to [9] as well as a medium consisting of at least any one member selected from water, an oil-soluble organic solvent, and a polymerizable compound.

[11] An ink composition comprising the resin-coated pigment dispersion according to [10] and a binder resin.

[12] An inkjet ink composition that is the ink composition according to [11] having a resin viscosity of 50 mPa·s or less at 25°C.

[13] A method for producing the living radical polymer according to any of [1] to [3], comprising:

a polymerization step of forming a living radical polymer precursor using a polymerization initiator comprising an organic compound moiety and a dormant species, and a radical polymerizable unsaturated monomer; and

an introduction step of reacting a functional group-containing radical generator with a dormant species end derived from the dormant species of the precursor to introduce a terminal functional group structure derived from the functional group-containing radical generator in place of the dormant species end.

[13-1] The method for producing the living radical polymer according to [13], wherein a reaction temperature for producing the living radical polymer in the introduction step is within the range of +15°C to +35°C based on a 10-hour half-life temperature of the functional group-containing radical generator.

[13-2] The method for producing the living radical polymer according to [13] or [13-1], wherein in the polymerization step, 0.1 to 50 mol of the polymerization initiator is used per 100 mol of the radical polymerizable unsaturated monomer.

[13-3] The method for producing the living radical polymer according to any of [13], [13-1], and [13-2], wherein in the introduction step, 1 to 50 mol of the functional group-containing radical generator is used per mol of the dormant species end of the precursor.

[14] The method for producing the living radical polymer according to [13], wherein the functional group-containing radical generator is represented by any of the following formula (3) to formula (5):

[Chem. 3]

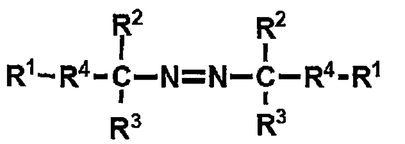

(3)

wherein

each $R^1$ is independently at least one functional group selected from a carboxyl group, a hydroxy group, and an amino group,

$R^2$ and $R^3$ are each independently at least one group selected from hydrogen, a $C_{1-3}$ alkyl group, and a cyano

group, and
each $R^4$ is independently a $C_{1-3}$ alkylene group, an imino group, a N-alkylenecarboxylic acid amide moiety, or a N-alkylene amidine moiety,

[Chem. 4]

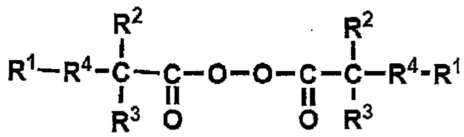

(4)

wherein
each $R^1$ is independently at least one functional group selected from a carboxyl group, a hydroxy group, and an amino group,
$R^2$ and $R^3$ are each independently at least one group selected from hydrogen, a $C_{1-3}$ alkyl group, and a cyano group, and
each $R^4$ is independently a $C_{1-3}$ alkylene group, an imino group, a N-alkylenecarboxylic acid amide moiety, or a N-alkylene amidine moiety,

[Chem. 5]

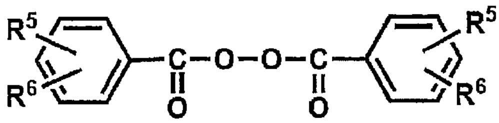

(5)

wherein
each $R^5$ is independently at least one functional group selected from a carboxyl group, a hydroxy group, and an amino group, and
each $R^6$ is independently one or two groups selected from hydrogen, a $C_{1-3}$ alkyl group, and a $C_{1-3}$ alkoxy group.

[15] The method for producing the living radical polymer according to [13] or [14], wherein in the introduction step, a radical generator having a faster decomposition rate than that of the functional group-containing radical generator, and/or a nonmetallic compound having an ionic bond with an iodide ion is further used.

ADVANTAGEOUS EFFECT OF THE INVENTION

Advantageous effects obtained by a living radical polymer having a specific functional group at least at one end, a composition thereof, a resin-coated pigment thereof, and a method for producing the living radical polymer according to the present invention will be described. Although some parts are unclear about a detailed mechanism of action of the advantageous effects, the mechanism of action is presumed as described below. However, the present invention does not have to be interpreted in a way limited to this mechanism of action.

A feature of the polymer of the present invention is to have a narrow molecular weight distribution and contain a specific functional group with high purity at least at one end. This facilitates segregating the specific functional group to near thin film surface. Furthermore, adsorption or reaction with the surface of another polymer or organic or inorganic particles is uniform and efficient. Hence, the polymer of the present invention can yield, for example, an additive such as a compatibilizer or a surface modifier, or a surface-functionalized polymer film or particles. Thus, a surface-modified pigment can be produced.

The method for producing the polymer of the present invention involves applying a temperature in the presence of a specific functional group-containing radical generator to a dormant species end of a precursor which is a polymer obtained using a polymerization initiator constituted by an organic compound and a dormant species, and a radical polymerizable unsaturated monomer. The mechanism of reaction thereof is presumed as described below. First, a functional group-containing radical formed from the radical generator extracts the dormant species present at the precursor end, thereby forming a precursor end radical. Meanwhile, the functional group-containing radical generator-derived functional group-containing radical excessively present based on the dormant species present at the end of the precursor can be rapidly diffused and is excessively present in a reaction solution because of a low molecular weight. Hence, the functional group-containing radical is rapidly bonded to the precursor end radical. This yields a precursor bonded to a specific functional group-containing compound with high purity. Furthermore, the functional group-containing radical inhibits a bond between precursor end radicals which widens a molecular weight distribution. Therefore, a narrow molecular weight distribution of the precursor can be maintained as it is in the obtained polymer.

Thus, the production method of the present invention can produce a polymer bonded to the desired specific functional group without deteriorating the polymer, in addition to the advantageous effects mentioned above.

The present invention can also provide a resin-coated pigment that enhances pigment dispersibility of a pigment dispersion by coating at least a portion of the surface with a resin composition comprising the polymer mentioned above, and is capable of improving the properties, such as preservation stability, discharge stability, and color developability, of an ink composition containing a binder resin in the pigment dispersion.

BRIEF DESCRIPTION OF DRAWINGS

[Figure 1] Figure 1 is a diagram showing a JMS-S3000 SpiralTOF(R) spectrum of a living radical polymer (PMMA-SA) having a specific functional group-containing compound at an end, which was obtained in Example 5 mentioned later, and illustrating polymer moietys from which peaks in the spectrum were derived.

[Figure 2] Figure 2 is a diagram showing only the peaks in the SpiralTOF spectrum of Figure 1.

[Figure 3] Figure 3 is a diagram showing a JMS-S3000 SpiralTOF spectrum of a precursor (PMMA-I) of the living radical polymer (PMMA-SA) obtained in Example 5, and illustrating polymer moietys from which peaks in the spectrum were derived.

[Figure 4] Figure 4 is a diagram showing only the peaks in the SpiralTOF spectrum of Figure 3.

[Figure 5] Figure 5 is a diagram showing a JMS-S3000 SpiralTOF spectrum of a polymer (PMMA-H) derived by the replacement of terminal iodine with hydrogen from the precursor (PMMA-I) of the living radical polymer (PMMA-SA) obtained in Example 5, and illustrating polymer moietys from which peaks in the spectrum were derived.

[Figure 6] Figure 6 is a diagram showing only the peaks in the SpiralTOF spectrum of Figure 5.

[Figure 7] Figure 7 is diagram summarizing (a) the peaks of the precursor (PMMA-I) in Figure 4, (b) the peaks of the polymer (PMMA-H) derived by the replacement of terminal iodine with hydrogen from the precursor in Figure 6, and (c) the peaks of the living radical polymer (PMMA-SA) in Figure 2.

EMBODIMENTS FOR CARRYING OUT THE INVENTION

Hereinafter, the invention of the present application will be described in detail.

[1. Living radical polymer]

(1-1. Structure of living radical polymer)

The living radical polymer of the present invention has a specific functional group at least at one end. Specifically, the living radical polymer of the present invention comprises a polymerization initiator-derived organic compound moiety at one end or in the center (in a backbone), and a compound having a specific functional group represented by the formula (1) or the formula (2) given below is bonded to an end directly or via an ester moiety. The terminal functional group structure is bonded to the backbone of the living radical polymer via the left bond line of the following formula (1) or formula (2):

[Chem. 6]

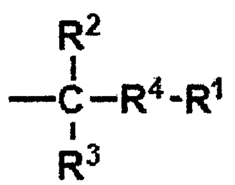

(1)

wherein

$R^1$ is at least one functional group selected from a carboxyl group, a hydroxy group, and an amino group,
$R^2$ and $R^3$ are each independently at least one group selected from hydrogen, a $C_{1-3}$ alkyl group such as a methyl group, and a cyano group, and
$R^4$ is a $C_{1-3}$ alkylene group, an imino group, a N-alkylenecarboxylic acid amide moiety, or a N-alkylene amidine moiety,

[Chem. 7]

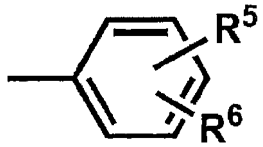

(2)

wherein
$R^5$ is at least one functional group selected from a carboxyl group, a hydroxy group, and an amino group, and
$R^6$ is one or two groups each independently selected from hydrogen, a $C_{1-3}$ alkyl group such as a methyl group, and a $C_{1-3}$ alkoxy group such as a methoxy group.

The structure of the living radical polymer having the functional group mentioned above differs depending mainly on a polymerization initiator, for example, the number of dormant species in one polymerization initiator molecule. For example, in the case of a living radical polymer obtained from a monofunctional polymerization initiator having one dormant species in one molecule, an organic compound fragment of the polymerization initiator is bonded to one end of the backbone polymer, and a compound having the specific functional group is bonded to the other end. On the other hand, in the case of a living radical polymer obtained from a polyfunctional polymerization initiator having two to four dormant species in one molecule, an organic compound moiety derived from the polymerization initiator is located in the center of the backbone or in the center of the polymer molecule, and two to four branched chains flank the organic compound moiety in the obtained polymer. A compound having the specific functional group is bonded to each end of the branched chain of the polymer.

Specifically, in the case of using a monofunctional initiator represented by the formula C-X (wherein C represents an organic compound moiety, and X represents a dormant species), the structure of the resulting living radical polymer is exemplified by the formula C-M-X (wherein M is a backbone). In the case of using a polyfunctional initiator represented by $C'$-$X_{2-4}$ (wherein C' represents an organic compound moiety, and $X_{2-4}$ represents two to four dormant species), the structure of the resulting living radical polymer is exemplified by the formula $C'$-$(M$-$X)_{2-4}$ (wherein M is a branched chain capable of forming the backbone). In the living radical polymer of the formula $C'$-$(M$-$X)_{2-4}$, the aforementioned organic compound moiety represented by C' is positioned in substantially the center of the living radical polymer because a plurality of branched chains represented by M each have a substantially uniform length. In short, use of the polyfunctional initiator can produce a living radical polymer in which the organic compound moiety is located in the center of a backbone having a plurality of branched chains.

These structures of the living radical polymer can be differently used as the optimum one depending on a required purpose. For example, in the case of reacting only one end, a polymer is favorable in which a compound having the specific functional group is bonded to an end of a living radical polymer obtained from a monofunctional polymerization initiator having no functional group. In the case of reacting two or more ends, a polymer is favorable in which a compound having the specific functional group is bonded to an end of a living radical polymer obtained from a monofunctional polymerization initiator having a functional group or a living radical polymer obtained from a polyfunctional polymerization initiator.

Examples of the polymer constituting the backbone of a living radical polymer before bonding of a compound having the specific functional group, the living radical polymer having a dormant species bonded to an end (hereinafter, also referred to as a precursor) include a homopolymer of one type of radical polymerizable unsaturated monomer, a random copolymer, a block copolymer, and a graft copolymer of two or more types of radical polymerizable unsaturated monomers, and a star (co)polymer and a ladder (co)polymer of one or more types of radical polymerizable unsaturated monomers, though the present invention is not limited by these examples.

(1-2. Radical polymerizable unsaturated monomer)

The radical polymerizable unsaturated monomer is used in the production of the living radical polymer and refers to a monomer having an unsaturated bond which is capable of performing radical polymerization in the presence of an organic radical. More specifically, a monomer, i.e., a so-called vinylic monomer, can be used in the formation of the backbone of the living radical polymer. The vinyl monomer is a generic name for monomers represented by the formula (6):

$$CHR^7{=}CR^8R^9 \qquad (6)$$

wherein $R^7$, $R^8$ and $R^9$ each independently represent a hydrogen atom or an organic group.

In the formula (6), the organic group includes, for example, an optionally substituted alkyl group having 1 to 12 carbon atoms, and an optionally substituted aryl group having 6 to 18 carbon atoms.

Examples of the vinyl monomer represented by the formula (6) include the following, though the present invention is not limited by these examples.

Examples of the vinylic monomer include styrene and derivatives thereof (wherein each of $R^7$ and $R^8$ is a hydrogen atom, and $R^9$ is a phenyl group optionally having a substituent), acrylic acid (wherein each of $R^7$ and $R^8$ is a hydrogen atom, and $R^9$ is a carboxyl group) and alkali metal salts thereof, acrylamide (wherein each of $R^7$ and $R^8$ is a hydrogen atom, and $R^9$ is a $CONH_2$ group) and derivatives thereof, acrylate (acrylic acid ester or acrylic acid salt), methacrylic acid (wherein $R^7$ is a hydrogen atom, $R^8$ is a methyl group, and $R^9$ is a carboxyl group) and alkali metal salts thereof, methacrylamide (wherein $R^7$ is a hydrogen atom, $R^8$ is a methyl group, and R is a $CONH_2$ group) and derivatives thereof, and methacrylate (methacrylic acid ester or methacrylic acid salt), though the present invention is not limited by these examples.

Specific examples of the styrene and the derivatives thereof include styrene (hereinafter, also referred to as St), o-, m-, or p-methoxystyrene, o-, m-, or p-t-butoxystyrene, o-, m-, or p-chloromethylstyrene, o-, m-, or p-chlorostyrene, o-, m-, or p-hydroxystyrene, o-, m-, or p-styrenesulfonic acid and alkali metal salts thereof, and o-, m-, or p-styreneboronic acid and derivatives thereof, though the present invention is not limited by these examples.

Specific examples of the acrylamide and the derivatives thereof include acrylamide, N-isopropylacrylamide, N,N-dimethylacrylamide, N-methylolacrylamide, and N-hydroxyethylacrylamide, though the present invention is not limited by these examples.

Specific examples of the acrylate include alkyl acrylate such as methyl acrylate, ethyl acrylate, propyl acrylate, n-butyl acrylate (hereinafter, also referred to as BA), t-butyl acrylate, hexyl acrylate, 2-ethylhexyl acrylate, n-octyl acrylate, nonyl acrylate, decanyl acrylate, lauryl acrylate, behenyl acrylate, and stearyl acrylate, arylalkyl acrylate such as benzyl acrylate, epoxyalkyl acrylate such as tetrahydrofurfuryl acrylate and glycidyl acrylate, cycloalkyl acrylate such as cyclohexyl acrylate, alkoxyalkyl acrylate such as 2-methoxyethyl acrylate and 2-butoxyethyl acrylate, hydroxyalkyl acrylate such as 2-hydroxyethyl acrylate and 2-hydroxypropyl acrylate, polyalkylene glycol monoacrylate such as diethylene glycol monoacrylate, and polyethylene glycol monoacrylate, alkoxypolyalkylene glycol acrylate such as methoxytetraethylene glycol acrylate and methoxypolyethylene glycol acrylate, dialkylaminoalkyl acrylate such as 2-(dimethylamino)ethyl acrylate, 3-chloro-2-hydroxypropyl acrylate, 2-hydroxy-3-phenoxypropyl acrylate, fluoroalkyl acrylate obtained by the substitution of an alkyl group of alkyl acrylate by a fluorine atom, acrylate obtained by the substitution of an alkyl group of alkyl acrylate by a tris(trialkylsiloxy)silyl group, and acrylate obtained by the substitution of an alkyl group of alkyl acrylate by an ethyl phosphorylcholine group, though the present invention is not limited by these examples.

Specific examples of the methacrylamide and the derivatives thereof include, methacrylamide, N-isopropylmethacrylamide, N,N-dimethylmethacrylamide, N-methylolmethacrylamide, and N-hydroxyethylmethacrylamide, though the present invention is not limited by these examples.

Specific examples of the methacrylate include alkyl methacrylate such as methyl methacrylate (hereinafter, also referred to as MMA), ethyl methacrylate, propyl methacrylate, n-butyl methacrylate, t-butyl methacrylate, hexyl methacrylate, 2-ethylhexyl methacrylate, n-octyl methacrylate, nonyl methacrylate, decanyl methacrylate, lauryl methacrylate, behenyl methacrylate, and stearyl methacrylate, arylalkyl methacrylate such as benzyl methacrylate, epoxyalkyl methacrylate such as tetrahydrofurfuryl methacrylate and glycidyl methacrylate, cycloalkyl methacrylate such as cyclohexyl methacrylate, alkoxyalkyl methacrylate such as 2-methoxyethyl methacrylate and 2-butoxyethyl methacrylate, hydroxyalkyl methacrylate such as 2-hydroxyethyl methacrylate and 2-hydroxypropyl methacrylate, polyalkylene glycol monomethacrylate such as diethylene glycol monomethacrylate and polyethylene glycol monomethacrylate, alkoxypolyalkylene glycol methacrylate such as methoxytetraethylene glycol methacrylate and methoxypolyethylene glycol methacrylate, dialkylaminoalkyl methacrylate such as 2-(dimethylamino)ethyl methacrylate, 3-chloro-2-hydroxypropyl methacrylate, 2-hydroxy-3-phenoxypropyl methacrylate, fluoroalkyl methacrylate such as 2,2,3,4,4,4-hexafluorobutyl methacrylate obtained by the substitution of an alkyl group of alkyl methacrylate by a fluorine atom, 3-[[tris(triethylsiloxy)silyl]propyl methacrylate obtained by the substitution of an alkyl group of alkyl methacrylate by a tris(trialkylsiloxy)silyl

group, and ethyl phosphorylcholine methacrylate obtained by the substitution of an alkyl group of alkyl methacrylate by an ethyl phosphorylcholine group, though the present invention is not limited by these examples.

Both $R^8$ and $R^9$ in the vinyl monomer represented by the formula (6) may be a carboxyl group or a group having carboxylate. Specifically, examples of such a monomer include itaconic acid such as itaconic acid, dimethyl itaconate, and monobutyl itaconate, and monoalkyl ester and dialkyl ester thereof, though the present invention is not limited by these examples.

The vinyl monomer may be a vinyl monomer having two or more double bonds (a vinyl group, an isopropenyl group, etc.). Specifically, examples thereof include dienic compounds (e.g., butadiene and isoprene), compounds having two allyl groups (e.g., diallyl phthalate), compounds having two acryl groups (e.g., ethylene glycol diacrylate), and compounds having two methacryl groups (e.g., ethylene glycol dimethacrylate), though the present invention is not limited by these examples.

A vinyl monomer other than those mentioned above may be used as the vinyl monomer. Specifically, examples thereof include vinyl esters (e.g., vinyl acetate, vinyl propionate, and vinyl benzoate), styrene derivatives other than those described above (e.g., $\alpha$-methylstyrene), vinyl ketones (e.g., vinyl methyl ketone, vinyl hexyl ketone, and methyl isopropenyl ketone), N-vinyl compounds (e.g., N-vinylpyrrolidone, N-vinylpyrrole, N-vinylcarbazole, N-vinylindole, and vinyloxazoline), acrylonitrile, methacrylonitrile, maleic acid and derivatives thereof (e.g., maleic anhydride), vinyl halides (e.g., vinyl chloride, vinylidene chloride, tetrachloroethylene, hexachloropropylene, vinyl fluoride, and vinylidene fluoride), and olefins (e.g., ethylene, propylene, 1- or 2-butene, 1-hexene, 1-octene, and cyclohexene), though the present invention is not limited by these examples.

These radical polymerizable unsaturated monomers may each be used singly, or two or more thereof may be used in combination.

The amount of the radical polymerizable unsaturated monomer used can be appropriately adjusted depending on the molecular weight of interest, etc.

(1-3. Properties of living radical polymer)

The number-average molecular weight of the living radical polymer composition is, for example, 1,000 to 200,000, preferably 1,000 to 100,000, more preferably 1,000 to 50,000. The weight-average molecular weight of the living radical polymer composition is a value equivalent to or slightly larger than the number-average molecular weight, for example, 1,000 to 240,000, preferably 1,000 to 120,000, more preferably 1,000 to 60,000.

A further feature of the living radical polymer is to have a narrow molecular weight distribution as compared with usual radical polymerization. The molecular weight distribution is a value obtained by dividing the weight-average molecular weight of the polymer by the number-average molecular weight thereof. As compared with a molecular weight distribution of approximately 2 or more obtained by usual radical polymerization, the molecular weight distribution of the living radical polymer obtained in the present invention is preferably 1.0 to 1.5, more preferably 1.0 to 1.3, further preferably 1.0 to 1.25, particularly preferably 1.0 to 1.24. However, the lower limit value of the molecular weight distribution range of the living radical polymer may be 1.05, 1.10, or the like.

The number-average molecular weight and the weight-average molecular weight of the polymer are values measured under the following measurement conditions by size-exclusion chromatography in accordance with a general rule (JIS K 7252-1 (2016)) and ISO 16014-1 (2012)).

[Number-average molecular weight and weight-average molecular weight of polymer]

Measurement instrument: EXTREMA size-extrusion chromatography (GPC/SEC) system manufactured by JASCO Corp.

Column: SHODEX manufactured by Showa Denko K.K., sample side: three columns of K-803, KF-804L, and KF-806F connected, reference side: KF-800RH

Eluent: tetrahydrofuran (hereinafter, referred to as THF)

Calibration curve standard substance: polymethyl methacrylate (for a sample other than a styrenic polymer) and polystyrene (for a styrenic polymer)

Preparation of sample for measurement: a polymer composition is dissolved in an eluent (THF) to prepare a solution having a polymer concentration of 0.1% by weight, and a filtrate obtained by the filtration of the solution through a filter is used.

(1-4. Polymerization initiator)

The polymerization initiator for use in the production of the precursor mentioned above (hereinafter, also referred to as a polymerization initiator for precursor production) comprises an organic compound moiety and a dormant species and preferably consists of only an organic compound moiety and a dormant species.

In the polymerization of the living radical polymer precursor, an already known method can be exploited. It is necessary to appropriately select the type of the polymerization initiator depending on a polymerization method as described below. The living radical polymer precursor can be produced by, for example, a nitroxide-mediated radical polymerization method (NMP) using a nitroxide compound (nitroxide group) as a dormant species, an atom transfer radical polymerization method (ATRP) using bromine as a dormant species, a reversible addition-fragmentation chain-transfer radical polymerization method (RAFT) using a thiocarbonylthio compound (thiocarbonylthio group) as a dormant species, radical polymerization using a dormant species such as organic tellurium, organic antimony, or organic bismuth (TERP using organic tellurium as a representative), or a radical polymerization method using iodine as a dormant species (e.g., RCMP).

Representative examples of the polymerization initiator for NMP using a nitroxide compound as a dormant species include t-butyl(1-phenyl-2-methylpropyl)(1-phenylethoxy)amine having a 1-phenylethyl group as an organic compound moiety and a t-butyl(1-phenyl-2-methylpropyl)nitroxide group as a dormant species, though the present invention is not limited by these examples. For NMP and the polymerization initiator for use therein, see a summary of p. 31-34 of "Controlled Radical Polymerization Guide" (Sigma-Aldrich Co., LLC) issued in July 2012.

Representative examples of the polymerization initiator for ATRP using bromine as a dormant species include monofunctional type t-butyl-$\alpha$-bromoisobutyrate having a t-butyl isobutyrate group as an organic compound moiety, monofunctional 2-hydroxyethyl-2-bromoisobutyrate having a hydroxy group-containing 2-hydroxyethyl-2-isobutyrate group as a functional group-containing organic compound moiety, and bifunctional ethylenebis(2-bromoisobutyrate) having an ethylenebis(isobutyrate group) as an organic compound moiety, though the present invention is not limited by these examples. Examples of the catalyst include aminic compounds such as 2,2'-bipyridine, and examples of the metal salt for the catalyst include transition metal halides such as copper(I) chloride, though the present invention is not limited by these examples. For ATRP and the polymerization initiator for use therein, see a summary of p. 2-18 of "Controlled Radical Polymerization Guide" (Sigma-Aldrich Co., LLC) issued in July 2012.

Representative examples of the polymerization initiator for RAFT polymerization using a thiocarbonylthio compound as a dormant species include monofunctional 2-cyano-2-propyl dithiobenzoate (hereinafter, referred to as CPBS) having a phenyl dithioester group as a dithioester-based dormant species and a 2-cyano-2-propyl group as an organic compound moiety, monofunctional 4-(4-cyanopentanoic acid) dithiobenzoate having a carboxyl group such as a 4-cyanopentanoic acid group as a functional group-containing organic compound moiety, monofunctional 2-cyano-2-propyl-n-dodecyl trithiocarbonate having a n-dodecyl trithiocarbonate group as a trithiocarbonate-based dormant species and a 2-cyano-2-propyl group as an organic compound moiety, and bifunctional ethylenebis(cyanopentanoic acid-n-dodecylthiocarbonate) having an ethylenebiscyanopentanoic acid group as an organic compound moiety, though the present invention is not limited by these examples. For RAFT polymerization and the polymerization initiator for use therein, see a summary of p. 19-30 of "Controlled Radical Polymerization Guide" (Sigma-Aldrich Co., LLC) issued in July 2012.

Representative examples of the polymerization initiator for TERP using an organic tellurium compound as a dormant species include 2-methyltellanylpropionitrile having a methyltellurium group as an organic tellurium-based dormant species and a cyanoisopropyl group as an organic compound moiety, though the present invention is not limited by these examples. For TERP and the polymerization initiator for use therein, see a summary of p. 365-367 of "Living Radical Polymerization 2. Polymerization Mechanism and Method 2" (Journal of the Society of Rubber Science and Technology, Japan, No. 82) issued in August 2009.

Representative examples of the polymerization initiator for use in RCMP using iodine as a dormant species include monofunctional 2-iodoisobutyronitrile (CP-I), 2-iodoethyl isobutyrate, and 2-iodo-2-ethyl phenylacetate (PAME) having an isobutyronitrile group, an ethyl isobutyrate group, and an ethyl phenylacetate group, respectively, as an organic compound moiety, monofunctional 2-iodoisobutyric acid and 2-iodo-2-phenylacetic acid having a carboxyl group-containing isobutyric acid group and a phenylacetic acid group, respectively, as a functional group-containing organic compound moiety, and bifunctional 2-hydroxyethyl 2-iodoisobutyrate and 2-hydroxyethyl 2-iodo-2-phenylacetate having a hydroxyethyl isobutyrate group and a hydroxyethyl phenylacetate group, respectively, as an organic compound moiety, though the present invention is not limited by these examples. For RCMP and the polymerization initiator for use therein, see a summary of p. 6610-6618 of Macromolecules (ACS Publications, No. 47) issued in September 2014.

The amount of the polymerization initiator for obtaining the living radical polymer is preferably 0.1 to 50 mol, more preferably 0.5 to 40 mol, per 100 mol of the radical polymerizable unsaturated monomer used from the viewpoint of polymerization control. Also, 0.5 to 10 mol of the polymerization initiator is further preferably used per 100 mol of the radical polymerizable unsaturated monomer from the viewpoint of a degree of polymerization.

The method for obtaining the living radical polymer is preferably RAFT using a thiocarbonylthio compound as a dormant species, TERP using an organic tellurium compound, or ATRP or RCMP using halogen (bromine or iodine), from the viewpoint of the efficiency of extraction of a dormant species at a polymer end and bonding of a functional group-containing organic compound fragment. Among them, ATRP or RCMP using halogen (bromine or iodine) is more preferred. RCMP is most preferred from the viewpoint of low odor, low stain, and low toxicity of the resulting polymer.

(1-5. Structure of organic compound moiety)

The living radical polymer of the present invention comprises an organic compound moiety derived from the polymerization initiator for precursor production mentioned above. Specifically, the organic compound moiety introduced to either one end portion or a backbone of the precursor by the polymerization initiator is maintained in a later produced living radical polymer even if the living radical polymer has a terminal structure changed from that of the precursor. The organic compound moiety thus contained in the living radical polymer is present either at one end or in a backbone of the living radical polymer.

As is evident from the fact that the organic compound moiety is derived from the polymerization initiator mentioned above, specific examples of the organic compound moiety include organic compound moietys having a structure derived from a 1-phenylethyl group that may be introduced in NMP, a t-butyl isobutyrate group, a 2-hydroxyethyl-2-isobutyrate group, and an ethylenebis(isobutyrate group) that may be introduced in ATRP, a cyanoisopropyl group, a cyanopentanoic acid group, a cyanoisopropyl group, and an ethylenebiscyanopentanoic acid group that may be introduced in RAFT polymerization, a cyanoisopropyl group that may be introduced in TERP, and an isobutyronitrile group, an ethyl isobutyrate group, an ethyl phenylacetate group, a carboxyl group-containing isobutyric acid group, a phenylacetic acid group, a hydroxyethyl isobutyrate group, and a hydroxyethyl phenylacetate group that may be introduced in RCMP.

Examples of the organic compound moiety exemplified by the structures mentioned above include: a residue (an alkylene group, etc. when contained in the polymer backbone) of an alkyl group or an alkylate group having a total of 1 to 20 carbon atoms, preferably a total of 1 to 12 carbon atoms, the group being optionally substituted by a phenyl group, halogen, a hydroxy group, cyano, or the like and optionally having an organic acid group such as a carboxyl group, an acetic acid group, or a butyric acid group; and a residue (an arylene group, etc. when contained in the polymer backbone) of an aryl group having a total of 6 to 24 carbon atoms, preferably a total of 8 to 18 carbon atoms, the group being optionally substituted by a phenyl group, halogen, a hydroxy group, cyano, or the like and optionally having an organic acid group such as a carboxyl group, an acetic acid group, or a butyric acid group.

Among them, an organic compound moiety that may be introduced by ATRP, RCMP, or the like using a polymerization initiator containing halogen such as iodine, for example, a residue of a t-butyl isobutyrate group, a 2-hydroxyethyl-2-isobutyrate group, an ethylenebis(isobutyrate group), an isobutyronitrile group, an ethyl isobutyrate group, an ethyl phenylacetate group, a carboxyl group-containing isobutyric acid group, a phenylacetic acid group, a hydroxyethyl isobutyrate group, or a hydroxyethyl phenylacetate group, is preferred as the organic compound moiety.

(1-6. Structure of terminal functional group)

In the living radical polymer of the present invention, a specific functional group represented by the formula (1) or the formula (2) mentioned above is bonded to at least one end, i.e., one end or both ends, directly or via an ester moiety.

[Chem. 8]

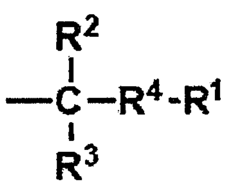

(1)

In the formula (1), $R^1$ to $R^4$ are as mentioned above.

Specifically, $R^1$ is at least one functional group selected from a carboxyl group, a hydroxy group, and an amino group. Preferably, $R^1$ is a carboxyl group or a hydroxy group.

$R^2$ and $R^3$ are each independently at least one group selected from hydrogen, a $C_{1-3}$ alkyl group, and a cyano group, preferably hydrogen or a methyl group.

$R^4$ is a $C_{1-3}$ alkylene group, an imino group, a N-alkylenecarboxylic acid amide moiety, or a N-alkylene amidine moiety, preferably an imino group, a N-alkylenecarboxylic acid amide moiety, or a N-alkylene amidine moiety.
The imino group is represented by =NH.
The N-alkylenecarboxylic acid amide moiety is represented by -C(=O)-NHRa-(wherein Ra is an alkylene group having 1 to 3 carbon atoms), and Ra is preferably an ethylene group (which has 2 carbon atoms).
The N-alkylene amidine moiety is represented by -C(=NH)-NHRb- (wherein Rb is an alkylene group having 1 to 3 carbon atoms), and Rb is preferably an ethylene group (which has 2 carbon atoms).
When the specific functional group of the formula (1) is bonded to an end portion of the backbone of the living radical polymer via the ester moiety, the terminal moiety is represented by $-OC(=O)-CR^2(R^3)-R^4-R^1$.

[Chem. 9]

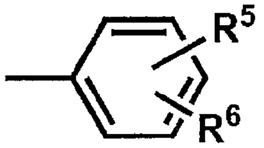

(2)

In the formula (2), $R^5$ and $R^6$ are as mentioned above.
Specifically, $R^5$ is at least one functional group selected from a carboxyl group, a hydroxy group, and an amino group, preferably a carboxyl group or a hydroxy group.
$R^6$ is one or two groups each independently selected from hydrogen, a $C_{1-3}$ alkyl group such as a methyl group, and a $C_{1-3}$ alkoxy group such as a methoxy group, preferably hydrogen or a methoxy group.
One to five $R^5$ moieties or one to five $R^6$ moieties may be bonded to the benzene ring in the terminal structure of the formula (2).
When the specific functional group of the formula (2) is bonded to an end portion of the backbone of the living radical polymer via the ester moiety, the terminal moiety is represented by $-OC(=O)-PhR^5(R^6)$ (wherein Ph represents the benzene ring of the formula (2)).
Examples of the structure of the terminal functional group of the formula (1) include a structure bonded to a functional group-containing compound generated by the denitrogenation of an azo compound having a specific functional group-containing compound, a structure having an ester moiety bonded to a compound generated from aliphatic diacyl type organic peroxide having a specific functional group-containing compound, and a structure bonded to a functional group-containing compound obtained by the decarboxylation of a compound (carbon dioxide derived from an ester moiety) generated from aliphatic diacyl type organic peroxide having a specific functional group-containing compound.
Specific examples of the structure of the formula (1) include, as mentioned above, a structure bonded to a functional group-containing compound generated by the denitrogenation of an azo compound having a specific functional group-containing compound, though the present invention is not limited by these examples.
Examples thereof include a 3-cyano-propyl carboxylate group ($R^1$: a carboxyl group, $R^2$: a methyl group, $R^3$: a cyano group, $R^4$: an ethylene group) generated by the denitrogenation of 4,4-azobis(4-cyanovaleric acid) (hereinafter, referred to as ACVA; 10-hour half-life temperature (hereinafter, also referred to as $T_{10h}$) = 69°C) having a carboxyl group as the specific functional group, and a N-(2-carboxyethyl)-2-methylpropionamidine moiety ($R^1$: a carboxyl group, $R^2$ = $R^3$: a methyl group, $R^4$: a N-ethylene amidine moiety) generated by the denitrogenation of 2,2-azobis{N-(2-carboxyethyl)-2-methylpropionamidine} ($T_{10h}$ = 57°C). Alternative examples thereof include a 2-methyl-N-(2-hydroxyethyl)propionamide moiety ($R^1$: a hydroxy group, $R^2$ = $R^3$: a methyl group, $R^4$: a N-ethylenecarboxylic acid amide moiety) generated by the denitrogenation of 2,2-azobis{2-methyl-N-(2-hydroxyethyl)propionamide} ($T_{10h}$ = 86°C) having a hydroxy group as the specific functional group. Further examples thereof include a 2-methylpropionamidine group ($R^1$: an amino group, $R^2$ = $R^3$: a methyl group, $R^4$: an imino group) generated by the denitrogenation of 2-2-azobis(2-methylpropionamidine) ($T_{10h}$ = 56°C) having an amino group as the specific functional group.
The 10-hour half-life temperature is a temperature when the amount of a compound remaining is decreased by half due to decomposition by the following method: the compound to be measured is dissolved in a more inert solvent to prepare a 0.1 mol/l (or 0.05 mol/l) solution, and the solution is left standing at a constant temperature for 10 hours in a nitrogen atmosphere in a glass ampule. The 10-hour half-life temperature of each compound mentioned above in this paragraph is a value obtained using water as the solvent.
Specific examples of the structure of the formula (1) include, as mentioned above, a structure having an ester moiety bonded to a compound generated from aliphatic diacyl type organic peroxide having a specific functional group-containing compound, and a structure bonded to a functional group-containing compound obtained by the decarboxylation

of a compound carbon dioxide derived from an ester moiety) generated from aliphatic diacyl type organic peroxide having a specific functional group-containing compound.

More specifically, examples thereof include the following structures, though the present invention is not limited by these examples: a carboxylic acid ethyl ester group ($R^1$: a carboxyl group, $R^2$ = $R^3$: hydrogen, $R^4$: a methylene group) mediated by an ester moiety generated from disuccinic acid peroxide (hereinafter, also referred to as SAPO; $T_{10h}$ = 66°C (in acetone)) having a carboxyl group as the specific functional group, or an ethyl carboxylate group obtained by the decarboxylation of carbon dioxide derived from the ester moiety, a carboxylic acid propyl ester group ($R^1$: a carboxyl group, $R^2$ = $R^3$: hydrogen, $R^4$: an ethylene group) mediated by an ester moiety generated from diglutaric acid peroxide ($T_{10h}$ = approximately 60°C) or a propyl carboxylate group obtained by the decarboxylation of carbon dioxide derived from the ester moiety, and a carboxylic acid butyl ester group ($R^1$: a carboxyl group, $R^2$ = $R^3$: hydrogen, $R^4$: a propylene group) mediated by an ester moiety generated from diadipinic acid peroxide ($T_{10h}$ = approximately 60°C) or a butyl carboxylate group obtained by the decarboxylation of carbon dioxide derived from the ester moiety. Alternative examples thereof include a 3-hydroxypropyl ester group ($R^1$: a hydroxy group, $R^2$ = $R^3$: hydrogen, $R^4$: an isoethylene group ($-C(CH_3)-$)) mediated by an ester moiety generated from di-(3-hydroxybutyroyl) peroxide ($T_{10h}$ = approximately 60°C) having a hydroxy group as the specific functional group, or a 3-hydroxypropyl group obtained by the decarboxylation of carbon dioxide derived from the ester moiety. Further examples thereof include a 3-aminoethyl ester group ($R^1$: an amino group, $R^2$ = $R^3$: hydrogen, $R^4$: a methylene group) mediated by an ester moiety generated from di-(3-aminopropionyl) peroxide ($T_{10h}$ = approximately 60°C) having an amino group as the specific functional group, or an aminoethyl ester group obtained by the decarboxylation of carbon dioxide derived from the ester moiety.

On the other hand, examples of the structure of the formula (2) include a structure having an ester moiety bonded to a compound generated from aromatic diacyl type organic peroxide having a specific functional group-containing compound, and a structure bonded to a functional group-containing compound obtained by the decarboxylation of an ester moiety generated from aromatic diacyl type organic peroxide having a specific functional group-containing compound.

Specific examples of the structure of the formula (2), i.e., as mentioned above, the structure bonded to ester moiety generated from aromatic diacyl type organic peroxide having a specific functional group-containing compound, and the structure bonded to a functional group-containing compound eliminated by the decarboxylation of an ester moiety generated from aromatic diacyl type organic peroxide having a specific functional group-containing compound, include the following structures, though the present invention is not limited by these examples.

Examples thereof include a 2-carboxyl-1-phenyl ester group ($R^5$: a 2-carboxyl group, $R^6$: hydrogen) mediated by an ester moiety generated from di(2-carboxyl-1-benzoyl) peroxide ($T_{10h}$ = approximately 75°C) having a carboxyl group as the specific functional group, or a phenyl carboxylate group obtained by the decarboxylation of the ester moiety. , Other examples thereof include a 4-hydroxy-3-methoxy-1-phenyl ester group ($R^5$: a 4-hydroxy group, $R^6$: a 3-methoxy group) mediated by an ester moiety generated from di-(4-hydroxy-3-methoxy-1-benzoyl) peroxide ($T_{10h}$ = approximately 60°C) having a hydroxy group as the specific functional group, or a 4-hydroxy-3-methoxy-1-phenyl group eliminated by the decarboxylation of the ester moiety.

The ester moiety is preferably a moiety derived from, for example, carboxylic acid alkyl ester such as carboxylic acid ethyl ester or carboxylic acid methyl ester.

As for the structure of the formula (1) or the formula (2) having the specific functional group-containing compound mentioned above, a living radical polymer bonded to the functional group-containing compound via an ester moiety is preferred; a living radical polymer bonded to a carboxylic acid ethyl ester group wherein $R^1$ is a carboxyl group ($R^2$ = $R^3$: hydrogen, $R^4$: a methylene group) or a 3-hydroxypropyl ester group wherein $R^1$ is a hydroxy group ($R^2$ = $R^3$: hydrogen, $R^4$: an isoethylene group ($-C(CH_3)-$)) is more preferred; and a living radical polymer bonded to a carboxylic acid ethyl ester group wherein $R^1$ is a carboxyl group, $R^2$ = $R^3$ is hydrogen, and $R^4$ is a methylene group is most preferred, from the viewpoint of obtaining a polymer bonded to the resulting specific functional group-containing compound with high purity.

[2. Living radical polymer composition]

Next, the living radical polymer composition of the present invention will be described. The living radical polymer composition comprises at least the living radical polymer mentioned above and a living radical polymer in which the compound having the specific functional group is not bonded to an end (polymer free of the specific terminal functional group).

The aforementioned living radical polymer in which the compound having the specific functional group is not bonded to an end includes a precursor and a living radical polymer derived from the precursor by the replacement of a dormant species with hydrogen through some reaction. The composition, primary structure, and molecular weight of such a polymer free of the specific terminal functional group are rarely changed and are the same as compared with those of the living radical polymer. Specifically, the aforementioned polymer free of the specific terminal functional group

typically includes a polymer differing only in terminal structure from the living radical polymer. Specific examples thereof include polymers having hydrogen in place of the specific functional group represented by the formula (1) and the formula (2) mentioned above.

Examples of the polymer that may be contained in the living radical polymer composition include the aforementioned ones derived from the precursor as well as known polymers such as thermoplastic resins and thermosetting resins which are polymers that are not derived from the precursor, solvents that dissolve the polymer derived from the precursor, and antioxidants.

The aforementioned living radical polymer having the specific terminal functional group is preferably present at a high ratio in the whole mixture of polymers derived from precursors, i.e., in a mixture of precursors in which a dormant species such as halogen including iodine is introduced at an end, polymers obtained by the replacement of the dormant species at the precursor end with hydrogen, and the living radical polymer. Specifically, the living radical polymer having the specific terminal functional group structure which is the terminal functional group structure represented by the formula (1) or the formula (2) is preferably contained at a ratio of 50 parts by weight or more, more preferably at a ratio of 70 parts by weight or more, further preferably at a ratio of 80 parts by weight or more, particularly preferably at a ratio of 90 parts by weight or more, to 100 parts by weight of the whole mixture of polymers derived from precursors. Ideally, almost all the living radical polymers have the specific terminal functional group structure. The method for producing the living radical polymer of the present invention can efficiently produce such a living radical polymer contained at a high content ratio (purity) in a mixture derived from precursors, without the need of a specific purification step or the like.

The living radical polymer composition may contain a thermoplastic resin or a thermosetting resin which is a polymer that is not derived from the precursor, a solvent that dissolves the polymer derived from the precursor, an antioxidant, or the like, in addition to the aforementioned living radical polymer having the specific terminal functional group and the aforementioned polymer free of the specific terminal functional group. The content of the aforementioned living radical polymer having the specific terminal functional group in the living radical polymer composition is preferably 1 to 100 parts by weight per 100 parts by weight of the whole polymer composition. On the other hand, the content of the polymer free of the specific terminal functional group is preferably 0 to 50 parts by weight per 100 parts by weight of the whole polymer composition. The content of the thermoplastic resin or the thermosetting resin which is a polymer that is not derived from the precursor, the solvent that dissolves the polymer derived from the precursor, the antioxidant, or the like is preferably 0 to 99 parts by weight per 100 parts by weight of the whole polymer composition.

[3. Resin composition for pigment coating]

The resin composition for pigment coating is used for coating at least a portion of the surface of a pigment. The resin composition for pigment coating can improve the pigment dispersibility of a pigment dispersion, and improve the preservation stability, discharge stability, color developability, and the like of an ink composition containing a binder resin in the pigment dispersion.

The resin composition for pigment coating comprises at least the living radical polymer mentioned above. Examples of components other than the living radical polymer in the resin composition for pigment coating include polymerization inhibitors and antioxidants.

The resin composition for pigment coating preferably comprises 50% by weight or more of the living radical polymer, more preferably 70% by weight or more of the living radical polymer, particularly preferably 90% by weight or more of the living radical polymer, based on the total weight of the composition. The resin composition for pigment coating may consist of only the living radical polymer.

[4. Resin-coated pigment comprising living radical polymer composition]

In the resin-coated pigment of the present invention, at least a portion of the surface is coated with the resin composition for pigment coating. The resin-coated pigment whose surface is thus coated with the resin composition for pigment coating mentioned above has favorable properties such as dispersibility.

(4-1. Pigment)

The type of the pigment for use as a component of the resin-coated pigment of the present invention is not particularly limited, and an organic pigment or an inorganic pigment is used.

Examples of the organic pigment include azo-based, diazo-based, condensed azo-based, thioindigo-based, indanthrone-based, quinacridone-based, anthraquinone-based, benzimidazolone-based, perylene-based, triphenylmethane-based, quinoline-based, anthraquinone-based, phthalocyanine-based, anthrapyridine-based, and dioxazine-based pigments.

Examples of the inorganic pigment include titanium oxide, ultramarine, iron blue, zinc oxide, colcothar, lead

yellow, transparent iron oxide, aluminum powders, zinc sulfide, lead white, zinc oxide, lithopone, antimony shite, basic lead sulfate, basic lead silicate, barium sulfate, calcium carbonate, gypsum, silica, iron black, titanium black, cobalt violet, Vermilion, molybdenum orange, red lead, colcothar, lead yellow, cadmium yellow, zinc chromate, yellow ocher, chromium oxide, ultramarine, iron blue, cobalt blue, carbon black, carbon fiber, carbon nanofiber, and carbon nanotubes (single-wall nanotubes, double-wall nanotubes, and multiwall nanotubes).

Such a pigment is preferably used by selecting the type, particle size, and type of treatment of the pigment depending on a purpose. For example, fine particles of an organic pigment are preferred for cases other than the case where colored matter is required to have occultation power. Particularly, in the case of forming colored matter having high resolution and high transparency, it is desirable to pulverize the pigment by wet milling (e.g., salt milling) or dry milling. In the case of applying inkjet printing, it is desirable to remove an organic pigment having a particle size larger than 0.5 μm and adjust an average particle size to 0.15 μm or smaller, in consideration of nozzle clogging.

More specific examples of such a pigment based on a color index (hereinafter, referred to as C.I.) number include C.I. Pigment blue 15, 15:1, 15:3, 15:4, 15:6, 22, 60, and 64, C.I. Pigment red 4, 5, 9, 23, 48, 49, 52, 53, 57, 97, 112, 122, 123, 144, 146, 147, 149, 150, 166, 168, 170, 177, 180, 184, 185, 192, 202, 207, 214, 215, 216, 217, 220, 221, 223, 224, 226, 227, 228, 238, 240, 242, 254, 255, 264, and 272, C.I. Pigment yellow 12, 13, 14, 17, 20, 24, 74, 83, 86, 93, 94, 95, 97, 109, 110, 117, 120, 125, 128, 129, 137, 138, 147, 148, 150, 151, 153, 154, 155, 166, 168, 175, 180, 181, 185, and 191, C.I. Pigment white 6, 18, and 21, C.I. Pigment black 7, 12, 27, 30, 31, 32, and 37, C.I. Pigment orange 16, 36, 43, 51, 55, 59, 61, 64, 71, and 73, C.I. Pigment violet 19, 23, 29, 30, 37, 40, and 50, and C.I. Pigment green 7 and 36. Preferred examples of such a pigment in view of color developability, dispersibility, and weather resistance include Pigment blue 15 and 15:3 for blue color, Pigment red 122 for red color, Pigment yellow 74 and 155 for yellow color, and Pigment white 6 for white color.

These pigments may each be used singly, or two or more types thereof may be used as a mixture. Examples of the mixing method include the mixing of powder pigments, the mixing of paste pigments, and the preparation of a solid solution by mixing in pigmentation. Any of these methods may be used.

The pigment may have undergone the derivatization of the pigment surface or may not have undergone surface treatment. The derivatization of the pigment surface refers to the modification of the pigment surface with a compound harboring a skeleton similar to that of the pigment at the time of a pigmentation (pigment production) step or after a pigmentation step. Examples of the surface-modified pigment include amine-modified and sulfonic acid-modified pigments. The amine-modified pigment is a pigment surface-treated with an aliphatic aminic compound such as laurylamine, stearylamine, or rosin amine, and the sulfonic acid-modified pigment is a pigment surface-treated with fuming sulfuric acid, concentrated sulfuric acid, chlorosulfuric acid, or the like.

(4-2. Living radical polymer composition for resin-coated pigment)

The living radical polymer for use in the resin-coated pigment is preferably a diblock copolymer or a triblock copolymer comprising a hydrophilic block (A) and a hydrophobic block (B).

In the case of an aqueous ink composition for which water is selected as a medium of a pigment dispersion, the hydrophilic block (A) has action of being dissolved in the medium water. In the case of a solvent-based ink composition for which an oil-soluble organic solvent is selected as a medium of a pigment dispersion or an ultraviolet-curable ink composition for which a radical polymerizable monomer is selected as a medium of a pigment dispersion, the hydrophilic block (A) has action of being adsorbed to the pigment.

As a specific example, the hydrophilic block (A) preferably comprises at least any one of a (meth)acrylic (co)polymer, a styrenic (co)polymer, and an aminic (co)polymer having a constituent unit derived from the same functional group as $R^1$ in the formula (1) or $R^5$ in the formula (2) mentioned above. A (co)polymer of (meth)acrylic acid, 2-hydroxyethyl (meth)acrylate, 4-hydroxystyrene, 2-aminoethyl (meth)acrylate, 2-dimethylaminoethyl (meth)acrylate, 4-vinylpyridine, or the like is more preferred.

In the case of an aqueous ink composition for which water is selected as a medium of a pigment dispersion, the hydrophobic block (B) has action of being adsorbed to the pigment. In the case of a solvent-based ink composition for which an oil-soluble organic solvent is selected or an ultraviolet-curable ink composition for which a radical polymerizable monomer is selected as a medium of a pigment dispersion, the hydrophobic block (B) has action of being dissolved in the medium oil-soluble organic solvent or radical polymerizable monomer.

As a specific example, the hydrophobic block (B) is preferably a (co)polymer of benzyl (meth)acrylate, styrene, or the like.

The triblock copolymer is more preferably an A-B-A type triblock copolymer comprising the hydrophilic block (A) and the hydrophobic block (B). For the triblock copolymer, the living radical polymer particularly preferably has the terminal functional group structure represented by the formula (1) or the formula (2) at both ends.

For the hydrophilic block (A) and the hydrophobic block (B) constituting the A-B type diblock copolymer and the A-B-A type triblock copolymer mentioned above, a radical reactive unsaturated monomer constituting the specific

(meth)acrylic (co)polymer, styrenic (co)polymer, or aminic (co)polymer mentioned above may be copolymerized with at least one radical polymerizable unsaturated monomer mentioned later in order to adjust its hydrophilicity or hydrophobicity.

The A-B type diblock copolymer or the A-B-A type triblock copolymer mentioned above has a proper acid value, amine value, or/and hydroxy value from the viewpoint of enhancing the chroma of a coating film of an ink composition comprising a pigment dispersion. The value of the acid value, the amine value, or/and the hydroxy value is preferably 20 mg KOH/g or more, more preferably 20 to 200 mg KOH/g, further preferably 40 to 100 mg KOH/g, particularly preferably 60 to 95 mg KOH/g, for example, 70 to 95 mg KOH/g or 80 to 90 mg KOH/g.

The number-average molecular weight of the A-B type diblock copolymer or the A-B-A type triblock copolymer mentioned above is, for example, 1,000 to 50,000, preferably 1,000 to 30,000, more preferably 1,000 to 10,000, particularly preferably 1,000 to 8,000.

The weight-average molecular weight of the A-B type diblock copolymer or the A-B-A type triblock copolymer mentioned above is a value equivalent to or slightly larger than the number-average molecular weight, for example, 1,000 to 60,000, preferably 1,000 to 35,000, more preferably 1,000 to 15,000, particularly preferably 1,000 to 10,000.

[5. Resin-coated pigment dispersion]

The resin-coated pigment dispersion of the present invention comprises at least the resin-coated pigment mentioned above. Further, a medium is selected depending on the form of a final ink composition, and this medium is contained therein. Specifically, as for the medium of the pigment dispersion, for example, water is selected for an aqueous ink composition; an oil-soluble organic solvent is selected for a solvent-based ink composition; and a polymerizable compound is selected for a UV-curable ink composition.

(5-1. Water)

Purified water, ion exchange water, distilled water, or the like can be used as the water that may be contained in the resin-coated pigment dispersion. Among them, ion exchange water from which a divalent metal ion which tends to inhibit pigment dispersibility has been removed in advance is preferably used. Examples of the divalent metal ion include magnesium ions, calcium ions, strontium ions, barium ions, iron ions, cobalt ions, and nickel ions.

The water may be supplemented with a water-soluble organic solvent. Specific examples of the water-soluble organic solvent include alkyl alcohols having 1 to 4 carbon atoms, such as methyl alcohol, ethyl alcohol, n-propyl alcohol, isopropyl alcohol, n-butyl alcohol, sec-butyl alcohol, and tert-butyl alcohol, alkylene glycols having an alkylene group containing 2 to 6 carbon atoms, such as ethylene glycol, propylene glycol, butylene glycol, triethylene glycol, 1,2,6-hexanetriol, thiodiglycol, hexylene glycol, and diethylene glycol, lower alkyl ethers of polyhydric alcohols, such as glycerin, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether, N-methyl-2-pyrrolidone, 2-pyrrolidone, and 1,3-dimethyl-2-imidazoline.

Each of the contents of the water and the water-soluble organic solvent in the resin-coated pigment dispersion is, for example, 50% by weight or more or 70% by weight or more, based on the total weight of the dispersion.

(5-2. Oil-soluble organic solvent)

Examples of the oil-soluble organic solvent that may be contained in the resin-coated pigment dispersion include: ester-based solvents such as ethyl acetate, propyl acetate, isopropyl acetate, and butyl acetate; aromatic solvents such as toluene, xylene, and tetralin; hydrocarbon-based solvents such as cyclohexane; ketone-based solvents such as acetone, methyl ethyl ketone, methyl isobutyl ketone, and cyclohexanone; glycol ether-based solvents such as triethylene glycol monomethyl ether, dipropylene glycol monomethyl ether, tripropylene glycol monomethyl ether, propylene glycol monopropyl ether, dipropylene glycol monopropyl ether, propylene glycol monobutyl ether, dipropylene glycol monobutyl ether, and tripropylene glycol monobutyl ether; glycol ether ester-based solvents such as ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate, dipropylene glycol monomethyl ether acetate, and propylene glycol diacetate; and plant oils such as flaxseed oil, soybean oil, and castor oil. Any of the organic solvents mentioned above may be used singly, or two or more thereof may be used as a mixture.

The content of the oil-soluble organic solvent in the resin-coated pigment dispersion is, for example, 50% by weight or more or 70% by weight or more, based on the total weight of the dispersion.

(5-3. Polymerizable compound)

The polymerizable compound is a polymerizable compound that is cross-linked or polymerized by ultraviolet irradiation. Examples of the polymerizable compound include radical polymerizable compounds, cationic polymerizable compounds, and mixtures thereof.

The radical polymerizable compound includes a (meth)acrylate compound or the like. The (meth)acrylate compound includes a monofunctional unsaturated monomer, a bifunctional unsaturated monomer, or a trifunctional or higher polyfunctional unsaturated monomer.

Examples of the monofunctional unsaturated monomer include methyl (meth)acrylate, ethyl (meth)acrylate, isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, isodecyl (meth)acrylate (hereinafter, referred to as IDA or IDMA) 2-hydroxyethyl (meth)acrylate, 2-hydroxypropyl (meth)acrylate, 2-hydroxybutyl (meth)acrylate, butoxyethyl (meth)acrylate, 2-(ethoxyethoxy)ethyl (meth)acrylate (hereinafter, referred to as EEEA or EEEMA), cyclohexyl (meth)acrylate, tert-butylcyclohexyl (meth)acrylate, phenoxyethyl (meth)acrylate, isobornyl (meth)acrylate, and β-carboxyethyl (meth)acrylate.

Examples of the bifunctional unsaturated monomer include polyethylene glycol di(meth)acrylate, 1,6-hexanediol di(meth)acrylate, triethylene glycol di(meth)acrylate, tripropylene glycol di(meth)acrylate, neopentyl glycol di(meth)acrylate (hereinafter, referred to as NPGDA or NPGDMA), 1, 6-hexanediol diglycidyl ether di(meth)acrylate, bisphenol A diglycidyl ether di(meth)acrylate, and neopentyl glycol diglycidyl ether di(meth)acrylate.

Examples of the trifunctional or higher polyfunctional unsaturated monomer include trimethylolpropane tri(meth)acrylate, pentaerythritol tri(meth)acrylate, dipentaerythritol hexa(meth)acrylate, and tricyclodecanyl (meth)acrylate.

The cationic polymerizable compound includes a styrene derivative, a vinyl ether compound, an oxirane compound, an oxetane compound, and the like.

Examples of the vinyl ether compound include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexyl vinyl ether, benzyl vinyl ether, methoxyethyl vinyl ether, ethoxyethyl vinyl ether, butoxyethyl vinyl ether, ethoxyethoxyethyl vinyl ether, 4-hydroxyethyl vinyl ether, ethylene glycol divinyl ether, diethylene glycol divinyl ether, and trimethylolethane trivinyl ether.

Examples of the oxirane compound include known epoxy compounds, for example, phenyl glycidyl ether, p-t-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxy methylhexene oxide, bisphenol A diglycidyl ether, bisphenol F diglycidyl ether, bisphenol S diglycidyl ether, and 1,1,3-tetradecadiene dioxide.

The total content of the radical polymerizable monomers in the resin-coated pigment dispersion is, for example, 10 to 95% by weight or 30 to 90% by weight, based on the total weight of the dispersion.

(5-4. Method for producing dispersion)

The method for producing the resin-coated pigment dispersion of the present invention is not particularly limited, and the resin-coated pigment dispersion can be produced by mixing the resin-coated pigment mentioned above with water, an organic solvent, or a radical polymerizable monomer using a known dispersing machine, kneading machine, or the like.

The resin-coated pigment dispersion can be produced, for example, by dispersing a mixture consisting of the resin-coated pigment, water, an organic solvent, or a radical polymerizable monomer using a paint shaker, a kneader, a roll mill, a bead mill, a sand mill, an attritor, a dissolver, an extruder, a homo-mixer, or a high-pressure homogenizer. Among the dispersing machines, kneading machines, and the like mentioned above, a media type dispersing machine such as a sand mill or a bead mill is particularly preferred.

[6. Ink composition]

The ink composition of the present invention comprises the resin-coated pigment dispersion mentioned above and a binder resin.

(6-1. Binder resin)

Examples of the binder resin that may be contained in the ink composition include modified rosin resins such as lime rosin and maleinated rosin, rosin derivatives such as rosin-modified phenol resin, rosin, rosin polymers, rosin

ester, and hydrogenated rosin, (meth)acrylic resin, styrene-(meth)acrylic acid-based resin (P(S/MAA)), styrene-maleic acid-based resin, ethylene-vinyl acetate-based resin, coumarone-indene-based resin, terpene phenol-based resin, phenol resin, urethane resin, melamine resin, urea resin, epoxy-based resin, cellulose-based resin, vinyl chloride co- and terpolymers, xylene resin, alkyd resin, aliphatic hydrocarbon resin, butyral resin, maleic acid resin, and fumaric acid resin.

Any of the binder resins mentioned above may be used singly, or two or more thereof may be used as a mixture. Preferred examples of the binder resin include urethane resin and styrene-(meth)acrylic acid.

The ink composition preferably contains 1 to 30% by weight, more preferably 3 to 20% by weight, of the binder resin based on the total weight of the dispersion.

(6-2. Other components)

The ink composition of the present invention may be supplemented, if necessary, with a component other than the binder resin mentioned above. Examples of the component contained, particularly, in an ultraviolet-curable ink composition include photopolymerization initiators.

Examples of the photopolymerization initiator include acetophenone-based photopolymerization initiators such as 4-phenoxydichloroacetophenone, 4-t-butyl-dichloroacetophenone, diethoxyacetophenone, 1-(4-isopropylphenyl)-2-hydroxy-2-methylpropan-1-one, 1-hydroxycyclohexyl phenyl ketone, 2-benzyl-2-dimethylamino-1-(4-morpholinophenyl)-butan-1-one, and 2-methyl-1-[4-(methylthio)phenyl]-2-morpholinopropan-1-one, benzoin-based photopolymerization initiators such as benzoin, benzoin methyl ether, benzoin ethyl ether, benzoin isopropyl ether, and benzyl dimethyl ketal, benzophenone-based photopolymerization initiators such as benzophenone, benzoylbenzoic acid, methyl benzoylbenzoate, 4-phenylbenzophenone, hydroxybenzophenone, acrylated benzophenone, and 4-benzoyl-4'-methyldiphenyl sulfide, thioxanthone-based photopolymerization initiators such as thioxanthone, 2-chlorothioxanthone, 2-methylthioxanthone, isopropylthioxanthone, and 2,4-diisopropylthioxanthone, and triazine-based photopolymerization initiators such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-piperonyl-4,6-bis(trichloromethyl)-s-triazine, 2,4-bis(trichloromethyl)-6-styryl-s-triazine, 2-(naphtho-1-yl)-4,6-bis(trichloromethyl)-s-triazine, 2-(4-methoxy-naphtho-1-yl)-4,6-bis(trichloromethyl)-s-triazine, 2,4-bischloromethyl-(piperonyl)-6-triazine, and 2,4-bischloromethyl(4'-methoxystyryl)-6-triazine.

The content of the photopolymerization initiator in the resin-coated pigment dispersion is preferably 0.2 to 10 parts by weight, more preferably 0.5 to 5 parts by weight, particularly preferably 1 to 3 parts by weight, based on the total weight of the dispersion.

Various additives such as a photosensitizer, a photoacid generator, a plasticizer, a surface conditions, an ultraviolet inhibitor, an antioxidant, a hydrolysis inhibitor, and a drying accelerator can be further used, if necessary. The content of these additives is preferably 10% by weight or less, more preferably 5% by weight or less, particularly preferably 3% by weight or less, based on the total weight of the resin-coated pigment dispersion.

The content of the additive in the ink composition is preferably 10% by weight or less, more preferably 5% by weight or less, particularly preferably 3% by weight or less, based on the total weight of the ink composition.

(6-3. Method for producing ink composition)

The method for producing the ink composition is not particularly limited, and the ink composition can be produced by mixing the resin-coated pigment dispersion mentioned above, a binder resin, and the like using a known dispersing machine, kneading machine, or the like.

The ink composition can be used as, for example, a printing ink composition such as an inkjet ink composition, or a color resist for a color filter. In the case of using the ink composition as printing ink, the ink composition can be applied to inkjet printing, gravure printing, flexographic printing, silk screen printing, offset printing, or the like and is particularly suitably used in inkjet printing as mentioned above.

In the ink composition serving as, for example, an inkjet ink composition, the resin viscosity at 25°C is preferably 50 mPa·s or less, more preferably 30 mPa·s or less, further preferably 20 mPa·s or less, particularly preferably 10 mPa·s or less.

In the ink composition, the resin viscosity at 25°C is preferably 0.5 mPa·s or more, more preferably 1.0 mPa·s or more, further preferably 2.0 mPa·s or more, particularly preferably 3.0 mPa·s or more.

[7. Method for producing living radical polymer]

Next, the method for producing the living radical polymer of the present invention will be described. A feature of the production method is to produce a polymer that has a narrow molecular weight distribution and has a specific functional group at least at one polymer end with high purity.

The method for producing the polymer of the present invention comprises: a polymerization step of forming a living radical polymer precursor; and an introduction step of introducing a specific functional group structure to an end of the precursor. In the polymerization step, a radical polymerizable unsaturated monomer is polymerized into a precursor using a polymerization initiator comprising an organic compound moiety and a dormant species, or preferably a polymerization initiator consisting of an organic compound moiety and a dormant species. In the subsequent introduction step, a specific functional group-containing radical generator is reacted with a dormant species end of the precursor obtained in the polymerization step at a predetermined temperature to introduce thereto a terminal functional group structure derived from the functional group-containing radical generator. Hereinafter, each step will be described.

(7-1. Polymerization step)

In the polymerization step, for example, NMP, ATRP, RAFT polymerization, TERP, or RCMP mentioned above can be used. Each aforementioned polymerization initiator given in the description about these production methods can be used as the polymerization initiator for precursor production. Particularly, an organic iodine compound capable of efficiently eliminating the dormant species at the precursor end, followed by bonding, through the specific functional group-containing radical generator can be preferably used as the polymerization initiator. Hence, RCMP using at least the organic iodine compound as the polymerization initiator will be described in more detail.

The organic iodine compound that may be suitably used as the polymerization initiator for precursor production is described in detail in the preceding section. In addition to a method using the already produced polymerization initiator, polymerization initiator starting materials, for example, an azo compound and iodine, may be added at an initial stage of polymerization, and a polymerization initiator consisting of an organic iodine compound can be formed *in situ* through reaction therebetween and used.

Examples of the azo compound that is used for forming the organic iodine compound include functional group non-containing azo compounds such as 2,2-azobis(4-methoxy-2,4-dimethylvaleronitrile), 2,2-azobis(isobutyronitrile) (AIBN), 2,2-azobis(2-methylbutyronitrile), 1,1-azobis(cyclohexane-1-carbonitrile), and 2,2-azobis(2,4,4-trimethylpentane), and functional group-containing azo compounds such as 4,4-azobis-4-cyanovaleric acid (ACVA) having a carboxyl group, 2,2-azobis{2-methyl-N-(2-hydroxyethyl)propionamide} having a hydroxy group, and 2-2-azobis{2-(2-imidazolin-2-yl)propane} having an amino group, though the present invention is not limited by these examples.

The amount of the azo compound used for forming the polymerization initiator mentioned above is preferably 1 to 5 mol, more preferably 1.3 to 3 mol, per mol of the iodine.

For the purpose of efficiently polymerizing the polymerization initiator mentioned above, it is desirable to use the polymerization initiator in combination with a catalyst. Examples of the catalyst include known compounds that are coordinated to iodine to extract the iodine, though the present invention is not limited by these examples.

Examples of the catalyst include catalysts which are organic amine compounds or nonmetallic compounds having an ionic bond with an iodide ion, wherein a nonmetallic atom in the nonmetallic compound is in a cationic state and forms an ionic bond with an iodide ion, though the present invention is not limited by these examples.

Examples of the catalyst consisting of the organic amine compound specifically include triethylamine, tributylamine, 1,1,2,2-tetrakis(dimethylamino)ethene, 1,4,8,11-tetramethyl-1,4,8,11-tetraazacyclotetradecane, ethylenediamine, tetramethylethylenediamine, tetramethyldiaminomethane, tris(2-aminoethyl)amine, tris(2-(methylamino)ethyl)amine, and hematoporphyrin. These catalysts may each be used singly, or two or more types thereof may be used in combination.

Examples of the catalyst which is a nonmetallic compound having an ionic bond with an iodide ion, wherein a nonmetallic atom in the nonmetallic compound is in a cationic state and forms an ionic bond with an iodide ion specifically include ammonium salt, imidazolium salt, pyridinium salt, phosphonium salt, sulfonium salt, and iodonium salt and more specifically include tetrabutylammonium iodide, tetrabutylammonium triiodide, tetrabutylammonium bromodiiodide, 1-methyl-3-methyl-imidazolium iodide, 2-chloro-1-methylpyridinium iodide, methyl tributylphosphonium iodide (hereinafter, also referred to as PMBI), tetraphenylphosphonium iodide, tributylsulfonium iodide, and diphenyliodonium iodide. These catalysts may each be used singly, or two or more types thereof may be used in combination.

The amount of the catalyst is preferably 0.01 to 50 mol, more preferably 0.05 to 30 mol, further preferably 0.1 mol to 20 mol, still further preferably 0.5 to 10 mol, per 100 mol of the organic iodine compound from the viewpoint of accelerating a polymerization rate and reducing the amount of an unreacted monomer remaining.

In addition to the catalyst mentioned above, a small amount of a general-purpose radical polymerization initiator may be used, if necessary, for the purpose of accelerating a polymerization rate. The type of the general-purpose radical polymerization initiator does not have to be selected as strictly as the type of the polymerization initiator for precursor production mentioned above, and is appropriately used according to a polymerization temperature, a polymerization time, etc.

Examples of the general-purpose radical polymerization initiator include azo compounds and organic peroxide, though the present invention is not limited by these examples. These general-purpose radical polymerization initiators

may each be used singly, or two or more types thereof may be used in combination.

Examples of the azo compound can include the same as the examples of the azo compound mentioned above. These azo compounds may each be used singly, or two or more types thereof may be used in combination.

Examples of the organic peroxide include the specific functional group-containing diacyl peroxide mentioned above as well as functional group non-containing general-purpose organic peroxide, for example, diacyl peroxides such as di-(3,5,5-trimethylhexanoyl) peroxide and benzoyl peroxide, peroxydicarbonates such as di-n-propyl peroxydicarbonate and di-isopropyl peroxydicarbonate, dialkyl peroxides such as dicumyl peroxide and di-t-butyl peroxide, peroxyesters such as t-butyl peroxypivalate and t-butyl peroxy-2-ethylhexanoate, and peroxyketals such as 1,1-bis(t-butylperoxy)cyclohexane, though the present invention is not limited by these examples. These organic peroxides may each be used singly, or two or more types thereof may be used in combination.

If there is no need to use the general-purpose radical polymerization initiator, it is preferred that substantially no general-purpose radical polymerization initiator should be used, and it is more preferred that no general-purpose radical polymerization initiator should be used, from the viewpoint of avoiding the adverse effect of the general-purpose radical polymerization initiator. In this context, the phrase "substantially no general-purpose radical polymerization initiator is used" means an amount of the general-purpose radical polymerization initiator that has substantially no influence on polymerization reaction caused by the polymerization initiator. More specifically, the amount of the general-purpose radical polymerization initiator per mol of the catalyst is preferably 10 mmol or less, more preferably 1 mmol or less, further preferably 0.1 mmol or less.

The amount of the general-purpose radical polymerization initiator per 100 mol in total of the radical polymerizable unsaturated monomer components is preferably 0.005 to 30 mol, more preferably 0.01 to 20 mol, still more preferably 0.02 to 15 mol, from the viewpoint of accelerating a polymerization rate and reducing the amount of an unreacted radical polymerizable unsaturated monomer remaining.

The radical polymerizable unsaturated monomer is described in detail in the preceding section. Polymerization conditions in polymerizing the radical polymerizable unsaturated monomer can be appropriately set according to a method for polymerizing the radical polymerizable unsaturated monomer and is not particularly limited. The polymerization temperature is preferably room temperature to 200°C, more preferably 30 to 140°C. The atmosphere in polymerizing the radical polymerizable unsaturated monomer is preferably an inert gas such as nitrogen gas or argon gas. The reaction time can be appropriately set so as to conclude the polymerization reaction of the radical polymerizable unsaturated monomer.

The polymerization of the radical polymerizable unsaturated monomer may be bulk polymerization using no solvent, or solution polymerization using a solvent that dissolves the radical polymerizable unsaturated monomer or a polymer obtained therefrom. Emulsion polymerization, dispersion polymerization, suspension polymerization, or the like can be performed by using a solvent that does not dissolve the radical polymerizable unsaturated monomer or a polymer obtained therefrom.

Examples of the solvent for use in the solution polymerization of the radical polymerizable unsaturated monomer include water, aromatic solvents such as benzene, toluene, xylene, and ethylbenzene, alcoholic solvents such as methanol, ethanol, isopropanol, n-butanol, and t-butyl alcohol, halogen atom-containing solvents such as dichloromethane, dichloroethane, and chloroform, linear or branched aliphatic ether-based solvents such as propylene glycol methyl ether, dipropylene glycol methyl ether, ethyl cellosolve, butyl cellosolve, diglyme, and propylene glycol monomethyl ether acetate, alicyclic ether-based solvents such as tetrahydrofuran, 1,2-dioxane, 1,3-dioxane, and 1,4-dioxane, ester-based solvents such as ethyl acetate, butyl acetate, cellosolve acetate, and cellosolve acetate, ketone-based solvents such as acetone, methyl ethyl ketone, methyl isobutyl ketone, and diacetone alcohol, amide-based solvents such as dimethylformamide, and sulfoxide-based solvents such as dimethyl sulfoxide, though the present invention is not limited by these examples. These solvents may each be used singly, or two or more types thereof may be used in combination. The amount of the solvent can be appropriately determined in consideration of polymerization conditions, the composition of the monomer, the concentration of the resulting polymer, etc.

(7-2. Introduction step)

In the introduction step of the method for producing the polymer of the present invention, a temperature is applied to the dormant species end of the precursor obtained from the living radical polymerization initiator and the radical polymerizable unsaturated monomer in the presence of a specific functional group-containing radical generator to obtain a polymer having a terminal structure changed from that of the precursor. For example, a symmetric azo compound containing specific functional groups represented by the formula (3) wherein two compounds of the same type having a specific functional group represented by the formula (1) or the formula (2) mentioned above are bonded via an azo group, or symmetric diacyl peroxide containing specific functional groups represented by the formula (4) or the formula (5) wherein two such compounds are bonded via a diacyl peroxide group is suitably used as the specific functional group-containing radical generator.

[Chem. 10]

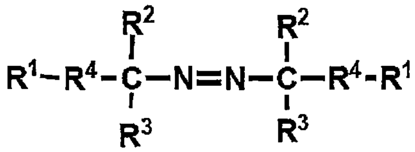

(3)

In the formula (3), each $R^1$ is independently at least one functional group selected from a carboxyl group, a hydroxy group, and an amino group, preferably a carboxyl group or a hydroxy group.

$R^2$ and $R^3$ are each independently at least one group selected from hydrogen, a methyl group, and a cyano group, preferably hydrogen or a methyl group.

Each $R^4$ is independently a $C_{1-3}$ alkylene group, an imino group, a N-alkylenecarboxylic acid amide moiety, or a N-alkylene amidine moiety.

[Chem. 11]

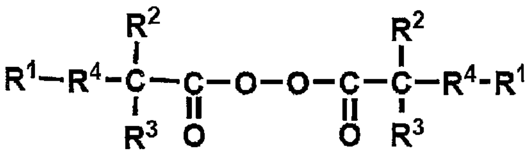

(4)

In the formula (4), each $R^1$ is independently at least one functional group selected from a carboxyl group, a hydroxy group, and an amino group, preferably a carboxyl group or a hydroxy group.

$R^2$ and $R^3$ are each independently at least one group selected from hydrogen, a methyl group, and a cyano group, preferably hydrogen or a methyl group.

Each $R^4$ is independently a $C_{1-3}$ alkylene group, an imino group, a N-alkylenecarboxylic acid amide moiety, or a N-alkylene amidine moiety.

[Chem. 12]

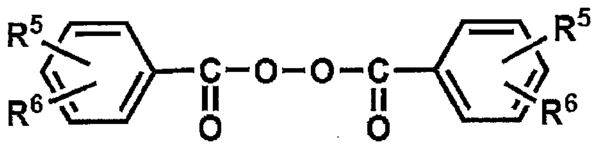

(5)

In the formula (5), each $R^5$ is independently at least one functional group selected from a carboxyl group, a hydroxy group, and an amino group, preferably a carboxyl group or a hydroxy group.

Each $R^6$ is independently one or two groups selected from hydrogen, a methyl group, and a methoxy group, preferably hydrogen or a methoxy group.

One to five $R^5$ moieties or one to four $R^6$ moieties may be bonded to each benzene ring in the formula (5).

For example, in the presence of the functional group-containing radical generator represented by the formula (3), the formula (4), or the formula (5), a radical that efficiently extracts the dormant species at the precursor end and binds to the resulting precursor end radical is an alkyl radical, an acyloxy radical, or the like having the specific functional group. Among them, an acyloxy radical particularly rapidly reacts with the precursor end radical. Therefore, the functional group-containing radical generator is preferably diacyl peroxide represented by the formula (4) or the formula (5). Among others, aliphatic diacyl peroxide SAPO (disuccinic acid peroxide), di-(3-hydroxybutyroyl) peroxide, or di-(3-aminopropionyl) peroxide is more preferred, and SAPO is most preferred, in view of the balance between a dormant species extraction rate and a reaction rate with the precursor end radical.

The amount of the aforementioned radical generator added is preferably 1 to 50 mol, more preferably 1 to 40 mol, further preferably 1 to 35 mol, still further preferably 1 to 30 mol, per mol of the dormant species at the precursor end.

Reaction conditions in reacting the specific functional group-containing radical generator with the dormant species at the precursor end can be appropriately set according to decomposition conditions for the functional group-containing radical generator and are not particularly limited.

However, the reaction temperature is preferably +15°C to +35°C, more preferably +25°C to +35°C, based on the 10-hour half-life temperature of the functional group-containing radical generator. The reaction atmosphere is preferably an inert gas such as nitrogen gas or argon gas. The reaction time can be appropriately set so as to conclude the decomposition of the functional group-containing radical generator and may be selected from the range of, for example, 50°C to 200°C, 60°C to 150°C, 70°C to 120°C, or 80°C to 100°C. A solvent can be appropriately used for attaining homogeneous reaction. Any solvent that can dissolve the living radical polymer can be appropriately used. Examples thereof can include the same as the examples of the solvent that is used in polymerizing the radical polymerizable unsaturated monomer mentioned above.

As mentioned above, the mechanism of reaction of the method for producing the polymer of the present invention is presumed as described below. First, a radical formed from the functional group-containing radical generator extracts the dormant species present at the precursor end, thereby forming a precursor end radical. Meanwhile, the functional group-containing radical excessively present based on the dormant species present at the precursor end is rapidly bonded to the precursor end radical. This yields a precursor having a specific functional group-containing compound bonded to an end with high purity. Specifically, the functional group-containing radical polymerization initiator in the present method simultaneously plays two roles, i.e., a role in extracting the dormant species present at the precursor end, and a role in causing a bond between the resulting precursor radical and a radical further formed from the functional group-containing radical polymerization initiator excessively contained in the reaction system.

Accordingly, provided that the precursor radical is formed at a stage earlier than the formation of a radical from such a functional group-containing radical generator, the functional group can be bonded to the precursor end more efficiently than the description above. As a result, a living radical polymer having a terminal structure derived from the functional group-containing compound can be obtained with higher purity. Accordingly, in addition to the radical generator having a functional group-containing compound (functional group-containing radical polymerization initiator), it is desirable to use a compound that rapidly extracts the dormant species at the precursor end in a manner faster than radical formation caused by the radical polymerization initiator.

As mentioned above, examples of the compound that extracts the radical from the precursor include radical generators that are decomposed faster than the decomposition rate of the radical generator having a functional group-containing compound (functional group-containing radical polymerization initiator), and nonmetallic compounds having an ionic bond with an iodide ion.

Examples of the radical generator that is decomposed faster than the decomposition rate of the functional group-containing radical generator can include already known radical generators. A radical generator having a 10-hour half-life temperature lower by 20°C or more than that of the radical generator having a functional group-containing compound can be used.

Examples of the nonmetallic compound having an ionic bond with an iodide ion specifically include ammonium salt, imidazolium salt, pyridinium salt, phosphonium salt, sulfonium salt, and iodonium salt and more specifically include tetrabutylammonium iodide, tetrabutylammonium triiodide, tetrabutylammonium bromodiiodide, 1-methyl-3-methyl-imidazolium iodide, 2-chloro-1-methylpyridinium iodide, methyl tributylphosphonium iodide (hereinafter, also referred to as BMPI), tetraphenylphosphonium iodide, tributylsulfonium iodide, and diphenyliodonium iodide. These catalysts may each be used singly, or two or more types thereof may be used in combination.

The amount of the aforementioned compound that extracts the radical from the precursor is 0.5 to 20 mol, preferably 1 to 10 mol, per mol of the dormant species at the end of the living radical polymer precursor from the viewpoint of accelerating a reaction rate.

## Examples

Hereinafter, the present invention will be described in more detail with reference to Examples. First, Production Examples of precursors will be given below.

### Production Example 1-1

Into a 30 ml Schlenk flask, 6.007 g of methyl methacrylate (MMA; manufactured by FUJIFILM Wako Pure Chemical Corp., distilled and purified by a routine method), 0.174 g of 2-iodo-2-ethyl phenylacetate (PAME; manufactured by Tokyo Chemical Industry Co., Ltd.), and 0.2066 g of methyl tributylphosphonium iodide (BMPI; manufactured by Tokyo Chemical Industry Co., Ltd.) were added, and the internal space of the Schlenk flask was purged with nitrogen

gas. The contents of the Schlenk flask were stirred at 70°C for 4 hours, then rapidly cooled to room temperature, and dissolved by the addition of 20 g of toluene (manufactured by Kanto Chemical Co., Inc.). Then, for the purpose of removing unreacted BMPI, the toluene solution was placed in a centrifugal tube and centrifuged at 2000 rpm for 15 minutes. Reprecipitation was performed while the supernatant was added dropwise to 500 g of hexane (manufactured by Kanto Chemical Co., Inc.). The solution was filtered through a PTFE membrane filter (pore size: 0.45 μm), and the resulting powder was dried in vacuum at 50°C for 8 hours to obtain a MMA polymer (hereinafter, referred to as PMMA) having iodine at one molecular end. This reaction is represented by the following formula (i).

[Chem. 13]

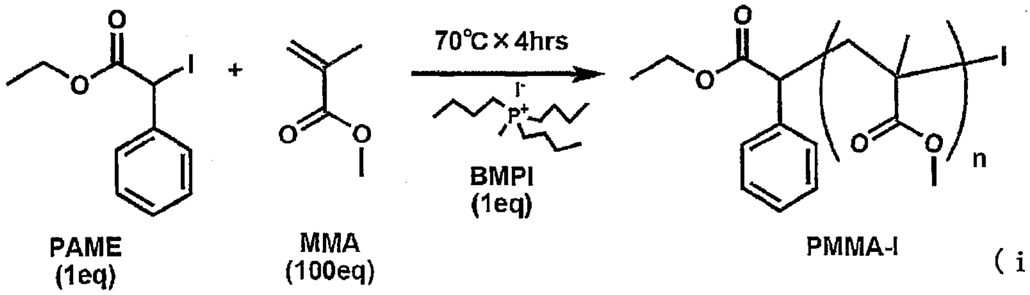


(i)

The obtained polymer had a number-average molecular weight of 7,800 and a molecular weight distribution (weight-average molecular weight/number-average molecular weight; hereinafter, referred to as Mw/Mn) of 1.13. The obtained polymer was dissolved in deuterated chloroform (containing TMS) and analyzed by $^{1}$H-NMR. As a result, the ratio between the integral value of methine protons (the number of hydrogen atoms: 2) of ethyl ester in PAME and the integral value of methyl protons (the number of hydrogen atoms: 3) of methyl ester in one MMA molecule immediately adjacent to iodine was 2:2.96, confirming that 98.7% of iodine present at the polymer end was introduced. The results are shown in Table 1.

Production Example 2

PMMA having iodine at one molecular end was obtained by the same method as in Production Example 1-1 except that the polymerization conditions were changed from 70°C for 4 hours to 70°C for 1 hour.

The obtained polymer had a number-average molecular weight of 2,900 and Mw/Mn of 1.15. From results of $^{1}$H-NMR, it was confirmed that 98.7% of iodine present at the polymer end was introduced. The results are shown in Table 1.

Production Example 3

PMMA having iodine at one molecular end was obtained by the same method as in Production Example 1-1 except that: the amount of PAME added was changed from 0.174 g to 0.044 g; the amount of BMPI added was changed from 0.2066 g to 0.4132 g; and the polymerization conditions were changed from 70°C for 4 hours to 70°C for 24 hours.

The obtained polymer had a number-average molecular weight of 56,000 and Mw/Mn of 1.19. From results of $^{1}$H-NMR, it was confirmed that 98.3% of iodine present at the polymer end was introduced. The results are shown in Table 1.

Production Example 4

A BA polymer (hereinafter, referred to as PBA) having iodine at one molecular end was obtained by the same method as in Production Example 1-1 except that: 7.692 g of n-butyl acrylate (BA; manufactured by FUJIFILM Wako Pure Chemical Corp., distilled and purified by a routine method) was used instead of using 6.007 g of MMA as the radical polymerizable unsaturated monomer; 0.117 g of 2-iodoisobutyronitrile (CP-I, manufactured by Tokyo Chemical Industry Co., Ltd.) was used instead of using 0.174 g of PAME as the organic iodine compound; the amount of BMPI added was changed from 0.2066 g to 0.8264 g; and the polymerization conditions were changed from 70°C for 4 hours to 110°C for 48 hours.

The obtained polymer had a number-average molecular weight of 7,600 and Mw/Mn of 1.25. The obtained polymer was dissolved in deuterated chloroform and analyzed by $^{13}$C-NMR. As a result, the ratio between the integral

value of carbon (the number of carbon atoms: 1) of quaternary carbon in CP-I and the integral value of carbon (the number of carbon atoms: 1) of tertiary carbon in one BA molecule immediately adjacent to iodine was 1:0.98, confirming that 98.0% of iodine present at the polymer end was introduced. The results are shown in Table 1.

Production Example 5

A St polymer (hereinafter, referred to as PSt) having iodine at one molecular end was obtained by the same method as in Production Example 1-1 except that: 6.249 g of styrene (St; manufactured by FUJIFILM Wako Pure Chemical Corp., distilled and purified by a routine method) was used instead of using 6.007 g of MMA as the radical polymerizable unsaturated monomer; 0.152 g of iodine and 0.0985 g of 2,2-azobis(isobutyronitrile) (AIBN, manufactured by FUJIFILM Wako Pure Chemical Corp.) were used instead of using 0.174 g of PAME as the organic iodine compound; and the polymerization conditions were changed from 70°C for 4 hours to 80°C for 18 hours.

The obtained polymer had a number-average molecular weight of 7,700 and Mw/Mn of 1.23. The obtained polymer was dissolved in deuterated chloroform and analyzed by $^{13}$C-NMR. As a result, the ratio between the integral value of carbon (the number of carbon atoms: 1) of quaternary carbon in CP-I and the integral value of carbon (the number of carbon atoms: 1) of tertiary carbon in one St molecule immediately adjacent to iodine was 1:0.98, confirming that 98.0% of polymer end iodine was introduced. The results are shown in Table 1.

Production Example 6

PMMA having a phenyl dithioester group at one molecular end was obtained by the same method as in Production Example 1-1 except that: 0.133 g of a RAFT agent cyanopropyl dithiobenzoate (manufactured by Sigma-Aldrich Japan; hereinafter, referred to as CPBS) was used instead of using 0.174 g of the organic iodine compound PAME; and the amount of AIBN was changed to 0.328 g.

The obtained polymer had a number-average molecular weight of 7,900 and Mw/Mn of 1.21. From results of $^{1}$H-NMR, it was confirmed that 98.4% of phenyl dithioester present at the polymer end was introduced. The results are shown in Table 1.

[Table 1]

| | | | | Production Example 1-1 | Production Example 2 | Production Example 3 | Production Example 4 | Production Example 5 | Production Example 6 |
|---|---|---|---|---|---|---|---|---|---|
| Component and material of living radical polymer | Organic iodine compound | PAME | eq | 1 | 1 | 0.25 | - | - | - |
| | | CPI | eq | - | - | - | 1 | - | - |
| | RAFT agent | CPBD | eq | - | - | - | - | - | 1 |
| | Iodine | $I_2$ | eq | - | - | - | - | 0.5 | |
| | Radical polymerizable unsaturated monomer | MMA | eq | 100 | 100 | 100 | - | - | 100 |
| | | BA | eq | - | - | - | 100 | - | - |
| | | St | eq | - | - | - | - | 100 | - |
| | Iodine-extracting compound | BMPI | eq | 1 | 1 | 2 | 4 | 0.5 | - |
| | Polymerization initiator | AIBN | eq | - | - | - | - | 1 | 0.33 |
| Production conditions for living radical polymer | Polymerization temperature (°C) | | | 70 | 70 | 70 | 110 | 80 | 70 |
| | Polymerization time (hr) | | | 4 | 1 | 24 | 48 | 18 | 4 |
| Properties of living radical polymer | Number-average molecular weight (Mn) | | | 7800 | 2900 | 56000 | 7600 | 7700 | 7900 |
| | Molecular weight distribution (Mw/Mn) | | | 1.13 | 1.15 | 1.19 | 1.25 | 1.23 | 1.21 |

Next, Examples will be described below in which a terminal structure derived from a specific functional group-containing compound was bonded to the precursors obtained in Production Examples mentioned above.

The identification of each polymer having a specific functional group-containing compound, which was obtained in Examples mentioned later, and the examination of its purity were performed on the basis of the following methods.

(Sample preparation)

To 0.1 g of the obtained polymer, 0.1 g of a matrix trans-2-{3-(4-t-butylphenyl)-2-methyl-2-propenylidene} malononitrile (manufactured by Tokyo Chemical Industry Co., Ltd.; hereinafter, referred to as DCTB) was added, and these were mixed while ground in a mortar. A very small amount of an ionizing agent sodium trifluoroacetate (manufactured by Tokyo Chemical Industry Co., Ltd.; hereinafter, referred to as NaTFA) was spotted to a sample plate in advance, and the obtained mixture of the polymer and DCTB was added thereto.

(Identification of polymer end group)

A MS spectrum obtained by the laser irradiation of the polymer sample at 50 kV was analyzed using JMS-S3000 SpiralTOF manufactured by JEOL Ltd. The MS spectrum of the sample was compared with the MS spectra of the precursor PMMA-I and PMMA-H from which iodine at the precursor end was eliminated. The MS spectrum of the sample had a spectrum that escaped the spectra derived from PMMA-I and PMMA-H, and the total molecular weight thereof was consistent with the total molecular weight of the molecular weight of carboxylic acid ethyl ester group-added PMMA plus the molecular weight of Na of the ionizing agent. Thus, it was confirmed that the carboxylic acid ethyl ester group was bonded directly to the end of PMMA.

(Purity measurement of polymer having specific functional group-containing compound)

The area of the MS spectrum derived from PMMA-H present in the sample was divided by the area of the main spectrum of PMMA-H to calculate a PMMA-H content in the sample. The purity was calculated as the purity of the polymer having a specific functional group-containing compound in the sample (content ratio of the polymer having a functional group-containing compound in a polymer composition) by subtracting a PMMA-H content percentage in the sample from 100.

Examples 1 to 3

Into a 30 ml Schlenk flask, 0.6 g of the polymer obtained in Production Example 1-1, 0.180 g of a radical generator disuccinic acid peroxide (SAPO; manufactured by NOF Corp., $T_{10h}$ = 66°C) having a carboxyl group, and 2 g of a solvent toluene (manufactured by Kanto Chemical Co., Inc.) were added, and dissolved. Then, the internal space of the Schlenk flask was purged with nitrogen gas. The contents of the Schlenk flask were stirred at 97°C (SAPO $T_{10h}$ (66°C) + 31°C) for 2 hours in Example 1, at 92°C (SAPO $T_{10h}$ + 26°C) for 4 hours in Example 2, and at 87°C (SAPO $T_{10h}$ + 21°C) for 8 hours in Example 3 and then rapidly cooled to room temperature. For the purpose of removing a decomposition residue of SAPO, 200 g of hot water of 60°C was added thereto, and the mixture was left standing in a separator funnel to isolate an oil phase as an upper layer. Reprecipitation was performed while the oil phase was added dropwise to 150 g of hexane. The solution was filtered through a PTFE membrane filter (pore size: 0.45 $\mu$m), and the resulting powder was dried in vacuum at 50°C for 8 hours to obtain a polymer bonded to a structure having a carboxyl group-containing compound while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

Examples 4 to 6

A polymer was produced by the same method as in Example 2 except that in Example 2, BMPI, which was a nonmetallic compound having an ionic bond with an iodide ion and was capable of extracting iodine at the precursor end faster than the radical generator having a specific functional group-containing compound, was added at 0.5 mol in Example 4, 5 mol in Example 5, and 10 mol in Example 6 per mol of the iodine end of the precursor. As a result, a polymer bonded to a structure having a carboxyl group-containing compound was obtained while the dormant species at the precursor end was eliminated. This reaction is represented by the following formula (ii).

[Chem. 14]

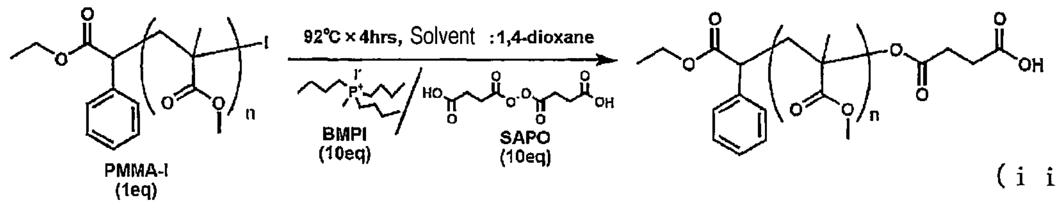


(ii)

The number-average molecular weight and Mw/Mn of the obtained polymer, and the purity of the obtained carboxylic acid ethyl ester group-bonded polymer were calculated. The results are shown in Table 2.

Examples 7 and 8

A polymer was produced by the same method as in Example 2 except that in a system, as in Example 5, involving combined use of BMPI, which was a nonmetallic compound having an ionic bond with an iodide ion and was capable of extracting iodine at the precursor end faster than the radical generator having a specific functional group-containing compound, SAPO was added at 1 mol in Example 7 and 30 mol in Example 8 per mol of the iodine end of the precursor. As a result, a polymer bonded to a structure having a carboxyl group-containing compound was obtained while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

Examples 9 and 10

Production was performed by the same method as in Example 2 except that in Example 2, Mn of the precursor was changed to 2,900 g/mol in Example 9 and 56,000 g/mol in Example 10. As a result, a polymer bonded to a structure having a carboxyl group-containing compound was obtained while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

Example 11

In a system, as in Example 5, involving combined use of BMPI, which was a nonmetallic compound having an ionic bond with an iodide ion and was capable of extracting iodine at the precursor end faster than the radical generator having a specific functional group-containing compound, the radical generator having specific functional group-containing compound was used in Example 11. Specifically, a polymer was produced by the same method as in Example 2 except that an azo compound (AVCA; manufactured by FUJIFILM Wako Pure Chemical Corp.) provided with the structure of a carboxylic acid-containing compound as a functional group was used as the radical generator having a specific functional group-containing compound in Example 11. As a result, a polymer composition bonded to a structure having a carboxyl group-containing compound was obtained while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

Examples 12 and 13

A polymer was produced by the same method as in Example 2 except that in Example 2, the precursor radical polymerizable unsaturated monomer was changed to BA in Example 12 and St in Example 13. As a result, a polymer composition bonded to a structure having a carboxyl group-containing compound was obtained while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

Comparative Example 1

A polymer was produced by the same method as in Example 2 except that: RAFT polymerization was adopted

as a living radical polymerization method for producing the precursor; a radical generator dilauroyl peroxide (LPO; manufactured by NOF Corp.) having a specific functional group non-containing compound was used; and the polymerization conditions were changed to 90°C (LPO $T_{10h}$ (62°C (in benzene)) + 28°C) for 4 hours. As a result, a polymer composition bonded to a structure having a carboxyl group-containing compound was obtained while the dormant species at the polymer end was eliminated. The number-average molecular weight and Mw/Mn of the obtained polymer, and the purity of the obtained carboxylic acid ethyl ester group-bonded polymer were calculated. The results are shown in Table 2.

[Table 2]

| | | | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 |
|---|---|---|---|---|---|---|---|---|---|---|---|---|---|---|---|---|---|---|
| Component and material of functional group-containing living radical resin composition | Living radical polymer | Production Example 1 | | eq | 1 | 1 | 1 | 1 | 1 | 1 | 1 | 1 | - | - | 1 | - | - | - |
| | | Production Example 2 | | eq | - | - | - | - | - | - | - | - | 1 | - | - | - | - | 1 |
| | | Production Example 3 | | eq | - | - | - | - | - | - | - | - | - | 1 | - | - | - | - |
| | | Production Example 4 | | eq | - | - | - | - | - | - | - | - | - | - | - | 1 | - | - |
| | | Production Example 5 | | eq | - | - | - | - | - | - | - | - | - | - | - | - | 1 | - |
| | | Production Example 6 | | eq | - | - | - | - | - | - | - | - | - | - | - | - | - | 1 |
| | Radical generator | Organic peroxide | SAPO ($T_{10h}$ = 66°C) | eq | 10 | 10 | 10 | 10 | 10 | 10 | 1 | 30 | 10 | 10 | - | 10 | 10 | - |
| | | | LPO ($T_{10h}$ = 62°C) | eq | - | - | - | - | - | - | - | - | - | - | - | - | - | 10 |
| | | Azo compound | ACVA ($T_{10h}$ = 69°C) | eq | - | - | - | - | - | - | - | - | - | - | 10 | - | - | - |
| | Catalyst BMPI eq | | | | - | - | - | 0.5 | 5 | 10 | 5 | 5 | - | - | 5 | - | - | - |

(continued)

| | | Example 1 | Example 2 | Example 3 | Example 4 | Example 5 | Example 6 | Example 7 | Example 8 | Example 9 | Example 10 | Example 11 | Example 12 | Example 13 | Comparative Example 1 |
|---|---|---|---|---|---|---|---|---|---|---|---|---|---|---|---|
| Production conditions for functional group-containing living radical resin composition | Reaction temperature (°C) | 97 | 92 | 87 | 92 | 92 | 92 | 92 | 92 | 92 | 92 | 95 | 92 | 92 | 90 |
| | Reaction temperature-$T_{10}$ (°C) | 31 | 26 | 21 | 26 | 26 | 26 | 26 | 26 | 26 | 26 | 26 | 26 | 26 | 28 |
| | Reaction time (hr) | 2 | 4 | 8 | 4 | 4 | a | 4 | 4 | a | 4 | 4 | 4 | 4 | 4 |
| Properties of functional group-containing living radical resin composition | Number-average molecular weight (Mn) | 8000 | 7900 | 7900 | 7800 | 7800 | 7800 | 7800 | 7900 | 2900 | 56200 | 7800 | 7600 | 7700 | 7900 |
| | Molecular weight distribution (Mw/Mn) | 1.16 | 1.15 | 1.14 | 1.13 | 1.13 | 1.14 | 1.13 | 1.14 | 1.16 | 1.19 | 1.14 | 1.24 | 1.23 | 1.22 |
| | Content ratio of functional group-containing living radical polymer in polymer composition (%)[1)] | 56 | 67 | 73 | 76 | 80 | 89 | 75 | 89 | 74 | 60 | 71 | 60 | 56 | 10 |

1) A functional group-unmodified peak content ratio In MALDI-TOFMS peaks was calculated from a calibration curve and subtracted from 100%.

From the results of Table 2, it is evident that a living radical polymer in which a structure having a specific functional group-containing compound is introduced on the dormant species side of polymer ends according to the present invention, i.e., a living radical polymer bonded to a specific functional group in place of the eliminated dormant species, has a narrow molecular weight distribution and high purity. Furthermore, the production method of the present invention can produce a living radical polymer that has a narrow molecular weight distribution and high purity by reacting a radical polymerization initiator having a specific functional group-containing compound with a dormant species at an end of a precursor.

Next, Production Examples of resin-coated pigments will be given below in which at least a portion of the surface is coated with a living radical polymer composition having a specific functional group at one end.

Production Example 1-2

A polymer (precursor) having iodine was obtained through the reaction of the formula (i) under the same conditions as in Production Example 1-1. As a result, the number-average molecular weight was 7,200, and the molecular weight distribution (weight-average molecular weight/number-average molecular weight; hereinafter, referred to as Mw/Mn) was 1.16.

Subsequently, into a 30 ml Schlenk flask, 0.6 g of the aforementioned polymer having iodine, 0.180 g of a radical generator disuccinic acid peroxide (SAPO; manufactured by NOF Corp., $T_{10h}$ = 66°C) having a carboxyl group, 0.1323 g of BMPI and 2 g of a solvent 1,4-dioxane (manufactured by Kanto Chemical Co., Inc.) were added, and dissolved. Then, the internal space of the Schlenk flask was purged with nitrogen gas. The contents of the Schlenk flask were stirred at 92°C (SAPO $T_{10h}$ (66°C) + 26°C) for 4 hours and then rapidly cooled to room temperature. For the purpose of removing a decomposition residue of SAPO, 200 g of hot water of 60°C was added thereto, and the mixture was left standing in a separator funnel to isolate an oil phase as an upper layer. Reprecipitation was performed while the oil phase was added dropwise to 150 g of hexane. The solution was filtered through a PTFE membrane filter (pore size: 0.45 μm), and the resulting powder was dried in vacuum at 50°C for 8 hours to obtain a polymer bonded to a structure having a carboxyl group-containing compound while the dormant species at the polymer end was eliminated. This reaction is also represented by the formula (ii).

The number-average molecular weight and Mw/Mn of the obtained polymer, and the purity (terminal reaction rate) of the obtained carboxylic acid ethyl ester group-bonded polymer were calculated. The results are shown in Table 3.

Production Example 7

A polymer of a hydrophobic block (B) having iodine at one molecular end was obtained by the same method as in Production Example 1-2 except that the polymerization conditions were changed from 6.007 g of MMA to 10.572 g of benzyl methacrylate (BzMA; manufactured by FUJIFILM Wako Pure Chemical Corp., distilled and purified by a routine method) and from 70°C for 4 hours to 70°C for 2 hours. The obtained polymer had a number-average molecular weight of 3,500 and Mw/Mn of 1.14.

Subsequently, in a 30 ml Schlenk flask, the whole amount of the aforementioned polymer was placed, and 4.806 g of MMA and 1.034 g of MAA (methacrylic acid) constituting a copolymer of a hydrophilic block (A) were placed therein. Further, 0.2066 g of BMPI was added thereto. After purging with nitrogen, the contents of the Schlenk flask were stirred at 70°C for 2 hours, then rapidly cooled to room temperature, and dissolved by the addition of 20 g of toluene (manufactured by Kanto Chemical Co., Inc.). Then, for the purpose of removing unreacted BMPI, the toluene solution was placed in a centrifugal tube and centrifuged at 2000 rpm for 15 minutes. Reprecipitation was performed while the supernatant was added dropwise to 500 g of hexane (manufactured by Kanto Chemical Co., Inc.). The solution was filtered through a PTFE membrane filter (pore size: 0.45 μm), and the resulting powder was dried in vacuum at 50°C for 8 hours to obtain an A-B type diblock copolymer comprising the hydrophilic block (A) introduced in the hydrophobic block (B) and having iodine at one molecular end. The number-average molecular weight and weight-average molecular weight of the polymer of the hydrophobic block (B) were subtracted from the number-average molecular weight and weight-average molecular weight of the obtained polymer. The hydrophilic block (A) had a number-average molecular weight of 7,500 and Mw/Mn of 1,16 thus calculated.

An A-B type diblock copolymer in which a structure having a carboxyl group-containing compound at an end of the hydrophilic block (A) was bonded to the hydrophobic block (B) was obtained by the same operation as in Production Example 1-2 except that 0.6 g of the aforementioned A-B type diblock copolymer having iodine was placed in the 30 ml Schlenk flask. The number-average molecular weight and Mw/Mn of the obtained copolymer, and the purity (terminal reaction rate %) of the obtained carboxylic acid ethyl ester group-bonded polymer were calculated. The results are shown in Table 3.

Production Example 8

An A-B type diblock copolymer in which a structure having a carboxyl group-containing compound at an end of the hydrophilic block (A) was bonded to the hydrophobic block (B) was obtained by the same method as in Production Example 7 except that the polymerization conditions for each of the polymer of the hydrophobic block (B) and the copolymer of the hydrophilic block (A) were changed from 70°C for 2 hours to 70°C for 1 hour. The number-average molecular weight and Mw/Mn of the obtained copolymer, and the purity of the obtained carboxylic acid ethyl ester group-bonded polymer were calculated. The results are shown in Table 3.

Production Example 9

An A-B type diblock copolymer in which a structure having a carboxyl group-containing compound at an end of the hydrophilic block (A) was bonded to the hydrophobic block (B) was obtained by the same method as in Production Example 7 except that the polymerization conditions for each of the polymer of the hydrophobic block (B) and the copolymer of the hydrophilic block (A) were changed from 70°C for 2 hours to 70°C for 4 hours. The number-average molecular weight and Mw/Mn of the obtained copolymer, and the purity of the obtained carboxylic acid ethyl ester group-bonded polymer were calculated. The results are shown in Table 3.

Production Example 10

An A-B-A type triblock copolymer having iodine at a molecular end was obtained by the same method as in Production Example 7 except that: 0.330 g of ethylene glycol-bis(2-iodo-2-phenyl acetate) (BPDG) was used instead of using 0.174 g of PAME as the living radical polymerization initiator; the amount of BMPI was changed from 0.2066 g to 0.4132 g; and the polymerization conditions were changed from 70°C for 2 hours to 70°C for 1 hour. Subsequently, an A-B-A type triblock copolymer in which structures having a carboxyl group-containing compound at respective ends of the hydrophilic blocks (A) were bonded to the hydrophobic block (B) was obtained by the same method as in Production Example 2 except that the amount of BMPI was changed from 0.1323 g to 0.2646 g. The number-average molecular weight and Mw/Mn of the obtained copolymer, and the purity of the obtained carboxylic acid ethyl ester group-bonded polymer were calculated. The results are shown in Table 3.

Production Example 11

An A-B type diblock copolymer in which a structure having an amino group-containing compound at an end of the hydrophilic block (A) was bonded to the hydrophobic block (B) was obtained by the same method as in Production Example 7 except that: 4.806 g of MMA and 1.034 g of MAA constituting the copolymer of the hydrophilic block (A) were changed to 4.806 g of MMA and 1.888 g of 2-(dimethylamino)ethyl methacrylate (DMEMA; manufactured by Tokyo Chemical Industry Co., Ltd., distilled and purified by a routine method); and 0.180 g of SAPO was changed to 0.135 g of di-(3-aminopropionyl) peroxide (APPO). The number-average molecular weight and Mw/Mn of the obtained copolymer, and the purity of the obtained 3-aminoethyl ester group-bonded polymer were calculated. The results are shown in Table 3.

Production Example 12

An A-B type diblock copolymer in which a structure having an amino group-containing compound at an end of the hydrophilic block (A) was bonded to the hydrophobic block (B) was obtained by the same method as in Production Example 7 except that: 4.806 g of MMA and 1.034 g of MAA constituting the copolymer of the hydrophilic block (A) were changed to 4.806 g of MMA and 1.563 g of 2-hydroxyethyl methacrylate (2-HEMA; manufactured by FUJIFILM Wako Pure Chemical Corp., distilled and purified by a routine method); and 0.180 g of SAPO was changed to 0.157 g of di-(3-hydroxybutyroyl) peroxide (HBPO). The number-average molecular weight and Mw/Mn of the obtained copolymer, and the purity of the obtained 3-hydroxypropyl ester group-bonded polymer were calculated. The results are shown in Table 3.

Comparative Production Example 1

A MMA polymer (hereinafter, referred to as PMMA) having iodine at one molecular end was obtained in the same manner as in Production Example 1-2. Results about the number-average molecular weight and Mw/Mn of the obtained copolymer are shown in Table 3.

Reference Production Example

A polymer bonded to a structure having a carboxyl group-containing compound was obtained by the same method as in Production Example 1 except that 0.180 g of SAPO was changed to 0.018 g thereof. The number-average molecular weight and Mw/Mn of the obtained polymer, and the purity of the obtained carboxylic acid ethyl ester group-bonded polymer were calculated. The results are shown in Table 3.

Comparative Production Example 2

Into a 30 ml Schlenk flask, 6.007 g of methyl methacrylate (MMA; manufactured by FUJIFILM Wako Pure Chemical Corp., distilled and purified by a routine method), 0.318 g of 3-mercaptopropionic acid (MPAP; manufactured by Tokyo Chemical Industry Co., Ltd.), and 0.328 g of AIBN were added, and the internal space of the Schlenk flask was purged with nitrogen gas. The contents of the Schlenk flask were stirred at 70°C for 4 hours, then rapidly cooled to room temperature, and dissolved by the addition of 20 g of toluene (manufactured by Kanto Chemical Co., Inc.). Then, for the purpose of removing unreacted BMPI, the toluene solution was placed in a centrifugal tube and centrifuged at 2000 rpm for 15 minutes. Reprecipitation was performed while the supernatant was added dropwise to 500 g of hexane (manufactured by Kanto Chemical Co., Inc.). The solution was filtered through a PTFE membrane filter (pore size: 0.45 μm), and the resulting powder was dried in vacuum at 50°C for 8 hours to obtain a MMA polymer (hereinafter, referred to as PMMA) having a carboxyl group at least at one molecular end. The number-average molecular weight and Mw/Mn of the obtained polymer, and the purity of the obtained carboxylic acid ethyl ester group-bonded polymer were calculated. The results are shown in Table 3.

[Table 3]

| Polymer | | | | | Production Example 1-2 | Production Example 7 | Production Example 8 | Production Example 9 | Production Example 10 | Production Example 11 | Production Example 12 | Comparative Production Example 1 | Comparative Production Example 2 | Reference Production Example |
|---|---|---|---|---|---|---|---|---|---|---|---|---|---|---|
| Before terminal modification | Organic iodine compound | | PAME | eq | 1 | 1 | 1 | 1 | - | 1 | 1 | 1 | - | 1 |
| | | | BPDG | eq | - | - | - | - | 1 | - | - | - | - | - |
| | Carboxylicacid-containing chain transfer agent | | MPA | eq | - | - | - | - | - | - | - | - | 1 | - |
| | Radical polymerizable monomer | First stage Hydrophobic block (B) | MMA | eq | 100 | - | - | - | - | - | - | 100 | 100 | 100 |
| | | | BzMA | eq | - | 50 | 50 | 50 | 50 | 50 | 50 | - | - | - |
| | | Second stage Hydrophilic block (A) | MMA | eq | - | 40 | 40 | 40 | 40 | 40 | 40 | - | - | - |
| | | | MAA | eq | - | 10 | 10 | 10 | 10 | - | - | - | - | - |
| | | | DMAEMA | eq | - | - | - | - | - | 10 | - | - | - | - |
| | | | HEMA | eq | - | - | - | - | - | - | 10 | - | - | - |
| | Number-average molecular weight (Mn) × $10^{-3}$: first stage/second stage | | | | 7.2/0 | 3.5/3.0 | 1.6/1.5 | 7.1/6.5 | 3.6/3.2 | 3.5/3.6 | 3.5/3.2 | 7.2/0 | 8.110 | 7.2/0 |
| | Molecular weight distribution (Mw/Mn): first stage/second stage | | | | 1.16/0 | 1.14/1.16 | 1.15/1.15 | 1.17/1.18 | 1.15/1.17 | 1.15/1.19 | 1.16/1.17 | 1.16/0 | 2.38/0 | 1.16/0 |
| | Acid value (mgKOH/g) | | | | Not detected | 80 | 80 | 80 | 82 | - | - | Not detected | Not detected | Not detected |
| | Amine value (mgKOH/g) | | | | - | - | - | - | - | 60 | - | - | - | - |
| | Hydroxy value (mgKOH/g) | | | | - | - | - | - | - | - | 50 | - | - | - |

(continued)

| Polymer | | | | | Production Example 1-2 | Production Example 7 | Production Example 8 | Production Example 9 | Production Example 10 | Production Example 11 | Production Example 12 | Comparative Production Example 1 | Comparative Production Example 2 | Reference Production Example |
|---|---|---|---|---|---|---|---|---|---|---|---|---|---|---|
| After terminal modification | Radical generator | Carboxyl group | SAPO | eq | 10 | 10 | 10 | 10 | 20 | - | - | - | - | 1 |
| | | Amino group | APPO | eq | - | - | - | - | - | 10 | - | - | - | - |
| | | Hydroxy group | HBPO | eq | - | - | - | - | - | - | 10 | - | - | - |
| | Terminal reaction rate (%) | | | | 89 | 89 | 91 | 88 | 90 | 87 | 90 | - | 100 | 30 |
| | Number-average molecular weight (Mn) × $10^{-3}$: first stage/second stage | | | | 7.2/0 | 3.5/3.0 | 1.6/1.5 | 7.1/6.5 | 3.6/3.2 | 3.5/3.6 | 3.5/3.2 | - | - | 7.2/0 |
| | Molecular weight distribution (Mw/Mn): first stage/second stage | | | | 1.16/0 | 1.15/1.16 | 1.15/1.16 | 1.17/1.17 | 1.16/1.17 | 1.15/1.19 | 1.16/1.17 | - | - | 1.16/0 |

Next, Examples of, for example, dispersions of pigments coated with the (co)polymers having a specific functional group-containing compound, which were obtained in Production Examples mentioned above, will be described below.

The evaluation of the pigment dispersions, etc. obtained in Examples mentioned later will be given in the following items.

<1. Pigment dispersion particle size (particle size of dispersed pigment)>

The pigment dispersion particle size is a value measured under the following measurement conditions by the dynamic light scattering method in accordance with a general rule (JIS Z 8828 (2019) and ISO 22412 (2017)).

An average particle size (D50: 50% cumulative value calculated from a smaller particle size side in a frequency distribution of scattering intensity) was measured as to each pigment dispersion obtained. The average particle size measurement was performed immediately after preparation of the pigment dispersion and after still standing at a temperature of 70°C for 7 days.

In the average particle size measurement, the pigment dispersion was diluted with various media, and D50 at 25°C was measured using a zeta potential/particle size/molecular weight measurement system (ELSZ-2000Z manufactured by Otsuka Electronics Co., Ltd.). The results are shown in Table 2. A smaller average particle size of the pigment dispersion immediately after dispersion means better initial dispersibility, and smaller change in value of the average particle size after a lapse of 7 days means better time-dependent stability.

<2. Viscosity of pigment dispersion>

The viscosity of each pigment dispersion is a value measured under the following measurement conditions by viscometry in accordance with a general rule (JIS K 5101-6-2 (2004)).

Specifically, the value of the viscosity was measured immediately after preparation of each pigment dispersion using a type BM rotational viscometer (the number of rotations: 6 rpm, 25°C). The results are shown in Table 4.

<3. Chroma of ink composition coating film>

The chroma of each ink composition coating film is a value measured by preparing the coating film under the following measurement conditions by a method using a colorimeter in accordance with a general rule (JIS K 5101-2-2 (2004)).

A sample of each pigment dispersion was developed at a wet film thickness of 2 $\mu$m onto a 100 $\mu$m thick PET film (trade name: Lumirror 100-T60, manufactured by Toray Industries, Inc.) using a bar coater (No. 6, winding diameter: 0.15 mm), and dried at 25°C to prepare a coating film. The reflection hue and chroma of the obtained coating film were measured using a spectrophotometer (trade name: SE 6000, manufactured by Nippon Denshoku Industries Co., Ltd.). A white board was put on the undersurface of the PET film, and the reflection hue was measured by a Hunter Lab color space under conditions of light source C (halogen lamp 12V50W), a viewing angle of 2°, and a measurement area of 30 mm$\phi$. From the obtained a and b values, a chroma C* value was calculated according to the expression given below. The white board used had light source C, a viewing angle of 2°, and tristimulus values X, Y and Z of $90 \leq X \leq 96$, $92 \leq Y \leq 98$, and $100 \leq Z \leq 116$ in an XYZ color space. The results are shown in Table 4.

$$\text{Chroma } C^* = (a^2 + b^2)^{1/2}$$

Example 14

5.5 parts by weight of the PMMA polymer having a carboxylic acid functional group-containing compound at one end, which was obtained in Production Example 1-2, were dissolved in 30 parts by weight of ethyl acetate. To the solution, 13.5 parts by weight of unmodified phthalocyanine copper (C.I. Pigment 15, FASTOGEN BLUE TGR-SD manufactured by DIC Corp.) were added, and dispersed for 30 minutes using Disper to prepare a mill base. The pigment was thoroughly dispersed in the mill base using a horizontal media dispersing machine. Then, 51 parts by weight of ethyl acetate were further added thereto to obtain a blue solvent-based dispersion liquid (resin-coated pigment dispersion) having a pigment concentration of 13.5%.

The pigment dispersion average particle size of the obtained dispersion liquid was 128 nm. Its viscosity at 25°C was 3.6 mPa·s. When this pigment dispersion liquid was preserved at 70°C for 1 week, the pigment average particle size of the dispersion liquid was 140 nm with a 9.4% rate of change.

Next, to this pigment dispersion liquid, 7 parts by weight of a binder resin styrene-methacrylic acid copolymer

was added, and dispersed using Disper to obtain a solvent-based ink composition. The chroma of a coating film of the ink composition was measured and was consequently 72. The results are shown in Table 4.

Examples 15 to 24 and 26 to 29, Comparative Examples 2 and 3, and Reference Example

A pigment dispersion liquid (resin-coated pigment dispersion) and an ink composition coating film were obtained by the same method as in Example 14 except that the conditions were changed to those shown in Table 4. The results are shown in Table 4.

Example 25

A pigment dispersion liquid and an ink composition coating film were obtained by the same method as in Example 14 except that: the conditions were changed to those shown in Table 4; in the coating film preparation, 2.5 parts by weight each of 1-hydroxycyclohexyl phenyl ketone and 2-benzyl-2-dimethylamino-1-(4-morpholinophenyl)-butan-1-one were added as the photopolymerization initiator per 100 parts by weight of the polymerizable compound; and the resin was cured with an ultraviolet irradiation machine (high-pressure mercury lamp). The results are shown in Table 4.

[Table 4]

| Composition | | | | | | Unit | Example 14 | Example 15 | Example 16 | Example 17 | Example 18 | Example 19 | Example 20 | Example 21 | Example 22 | Example 23 | Example 24 | Example 25 | Example 26 | Example 27 | Example 28 | Example 29 | Comparative Example 2 | Comparative Example 3 |
|---|---|---|---|---|---|---|---|---|---|---|---|---|---|---|---|---|---|---|---|---|---|---|---|---|
| Ink composition | Resin-coated pigment dispersion liquid | Resin-coated pigment | Pigment | Pigment blue 15 | Unmodified | parts by weight | 13.5 | 13.5 | 13.5 | - | - | - | - | - | - | 13.5 | 13.5 | 13.5 | 13.5 | 13.5 | 6.5 | 20 | 13.5 | 13.5 |
| | | | | | Amine-modified | parts by weight | - | - | - | 13.5 | - | - | - | - | - | - | - | - | - | - | - | - | - | - |
| | | | | | Sulfonic acid-modified | parts by weight | - | - | - | - | 13.5 | 13.5 | - | - | - | - | - | - | - | - | - | - | - | - |
| | | | | Pigment red 122 | Amine-modified | parts by weight | - | - | - | - | - | - | 13.5 | - | - | - | - | - | - | - | - | - | - | - |
| | | | | Pigment yellow 155 | Amine-modified | parts by weight | - | - | - | - | - | - | - | 13.5 | - | - | - | - | - | - | - | - | - | - |
| | | | | Pigment white 6 | Unmodified | parts by weight | - | - | - | - | - | - | - | - | 13.5 | - | - | - | - | - | - | - | - | - |
| | | | Polymer | Production Example 1-2 / Living radical polymer / PMMA homopolymer | Carboxyl group | parts by weight | 5.5 | - | - | - | - | - | - | - | - | - | - | - | - | - | - | - | - | - |
| | | | | Production Example 2 / Living radical polymer / PBzMA-b-P(MMA/MAA) | Carboxyl group | parts by weight | - | 5.5 | - | 5.5 | - | 5.5 | 5.5 | 5.5 | 5.5 | - | - | 5.5 | 5.5 | - | 5.5 | 5.5 | - | - |
| | | | | Production Example 3 / Living radical polymer / PBzMA-b-P(MMA/MAA) | Carboxyl group | parts by weight | - | - | - | - | - | - | - | - | - | 5.5 | - | - | - | - | - | - | - | - |
| | | | | Production Example 4 / Living radical polymer / PBzMA-b-P(MMA/MAA) | Carboxyl group | parts by weight | - | - | - | - | - | - | - | - | - | - | 5.5 | - | - | - | - | - | - | - |
| | | | | Production Example 5 / Living radical polymer / P(MMA/MAA)-b-PBzMA-b-P(MMA/MAA) | Carboxyl group | parts by weight | - | - | 5.5 | - | - | - | - | - | - | - | - | - | - | - | - | - | - | - |
| | | | | Production Example 6 / Living radical polymer / PBzMA-b-P(MMA/DMAEMA) | Amino group | parts by weight | - | - | - | - | 5.5 | - | - | - | - | - | - | - | - | - | - | - | - | - |
| | | | | Production Example 7 / Living radical polymer / PBzMA-b-P(MMA/HEMA) | Hydroxy group | parts by weight | - | - | - | - | - | - | - | - | - | - | - | - | - | 5.5 | - | - | - | - |
| | | | | Comparative Production Example 1 / Living radical polymer / PMMA homopolymer | Unmodified | parts by weight | - | - | - | - | - | - | - | - | - | - | - | - | - | - | - | - | 5.5 | - |
| | | | | Comparative Production Example 2 / Radical polymer / PMMA homopolymer | Carboxyl group | parts by weight | - | - | - | - | - | - | - | - | - | - | - | - | - | - | - | - | - | 5.5 |
| | | Solvent | | Ethyl acetate | | parts by weight | 81 | 81 | 81 | 81 | 81 | 80 | 81 | 81 | 81 | 81 | 81 | - | - | - | 88 | 74.5 | 81 | 81 |
| | | | | Polymerizable compound =EEEA/IDA/NPGDA=35/45/20 (weight ratio) | | parts by weight | - | - | - | - | - | - | - | - | - | - | - | 81 | - | - | - | - | - | - |
| | | | | Water/diethylene glycol monobutyl ether = 1/1 (weight ratio) | | parts by weight | - | - | - | - | - | - | - | - | - | - | - | - | 81 | 81 | - | - | - | - |
| | | Additive | | Dimethylaniline | | parts by weight | - | - | - | - | - | 1 | - | - | - | - | - | - | - | - | - | - | - | - |
| | Binder resin | | | Urethanic | | parts by weight | 7 | 7 | 7 | 7 | 7 | 7 | 7 | 7 | 7 | 7 | 7 | 7 | - | - | 7 | 7 | 7 | 7 |
| | | | | P (S/MAA) | | parts by weight | - | - | - | - | - | - | - | - | - | - | - | - | 7 | 7 | - | - | - | - |
| Copolymer valuation | Molecular weight | | | Number-average molecular weight (×10$^{3}$) | Compatible group/adsorbed group | g/mol | 7.2/0 | 3.5/3.0 | 3.6/3.2 | 3.5/3.0 | 3.5/3.6 | 3.5/3.0 | 3.5/3.0 | 3.5/3.0 | 3.5/3.0 | 1.6/1.5 | 7.1/6.5 | 3.5/3.0 | 3.5/3.0 | 3.5/3.2 | 3.5/3.0 | 3.5/3.0 | 7.2/0 | 8.1/0 |
| | | | | Degree of dispersion (PDI) | Compatible group/adsorbed group | - | 1.16/0 | 1.15/1.16 | 1.16/1.17 | 1.15/1.16 | 1.15/1.19 | 1.15/1.16 | 1.15/1.16 | 1.15/1.16 | 1.15/1.16 | 1.15/1.16 | 1.17/1.17 | 1.15/1.16 | 1.15/1.16 | 1.16/1.17 | 1.15/1.16 | 1.15/1.16 | 1.16/0 | 2.38/0 |
| | Acid value | | | | | mgKOH/g | Not detected | 80 | 82 | 80 | - | 80 | 80 | 80 | 80 | 80 | 80 | 80 | 80 | - | 80 | 80 | Not detected | Not detected |
| | Amine value | | | | | mgKOH/g | - | - | - | - | 60 | - | - | - | - | - | - | - | - | - | - | - | - | - |
| | Terminal modification rate | | | | | % | 89 | 89 | 90 | 89 | 87 | 89 | 89 | 89 | 89 | 91 | 89 | 88 | 89 | 90 | 89 | 89 | 0 | 100 |
| Dispersion liquid evaluation | Pigment dispersion particle size | | | Average particle size | Initial value | nm | 128 | 118 | 115 | 119 | 120 | 121 | 123 | 122 | 128 | 117 | 118 | 122 | 119 | 123 | 113 | 128 | 981 | 385 |
| | | | | | 70°C×7 days | nm | 140 | 127 | 119 | 125 | 128 | 132 | 134 | 132 | 136 | 127 | 127 | 131 | 127 | 132 | 118 | 142 | 1251 | 475 |
| | | | | | Rate of change | % | 9.4 | 7.6 | 3.5 | 5.0 | 6.7 | 9.1 | 8.9 | 8.2 | 6.3 | 8.5 | 7.6 | 7.4 | 6.7 | 7.3 | 4.4 | 10.9 | 27.5 | 23.4 |
| | Viscosity at 25°C | | | | | mPa·s | 3.6 | 3.4 | 3.2 | 3.4 | 3.5 | 3.7 | 3.5 | 3.4 | 3.5 | 3.5 | 3.5 | 5.4 | 3.2 | 3.4 | 3.3 | 3.7 | 5.3 | 4.3 |
| Coating film evaluation of ink composition | Chroma | | | Chroma (C*) | | - | 72 | 73 | 74 | 73 | 73 | 72 | 72 | 72 | 73 | 72 | 72 | 72 | 73 | 72 | 72 | 74 | 61 | 66 |

From the results of Table 4, it can be concluded that the resin composition for pigment coating according to

the present invention having a specific functional group at least at one end of a living radical copolymer, the resin composition for pigment coating being used for coating at least a portion of the surface of a pigment, enhanced the pigment dispersibility of a pigment dispersion. Furthermore, it was also confirmed that the resin composition for pigment coating was able to improve the preservation stability, discharge stability, color developability, etc. of an ink composition containing a binder resin in the pigment dispersion.

## Claims

1. A living radical polymer comprising a polymerization initiator-derived organic compound moiety at one end or in a backbone of the living radical polymer,

   wherein at least at any end, a terminal functional group structure represented by the following formula (1) or formula (2) is bonded to the backbone directly or via an ester moiety:

   [Chem. 1]

   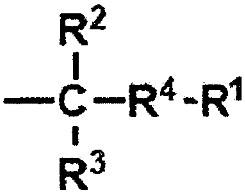

   (1)

   wherein
   $R^1$ is at least one functional group selected from a carboxyl group, a hydroxy group, and an amino group,
   $R^2$ and $R^3$ are each independently at least one group selected from hydrogen, a $C_{1-3}$ alkyl group, and a cyano group, and
   $R^4$ is a $C_{1-3}$ alkylene group, an imino group, a N-alkylenecarboxylic acid amide moiety, or a N-alkylene amidine moiety,

   [Chem. 2]

   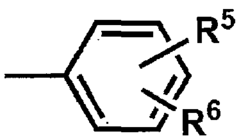

   (2)

   wherein
   $R^5$ is at least one functional group selected from a carboxyl group, a hydroxy group, and an amino group, and
   $R^6$ is one or two groups each independently selected from hydrogen, a $C_{1-3}$ alkyl group, and a $C_{1-3}$ alkoxy group.

2. The living radical polymer according to claim 1, wherein the terminal functional group structure represented by the formula (1) or the formula (2) is bonded to the backbone via the ester moiety.

3. The living radical polymer according to claim 1 or 2, wherein the living radical polymer comprises an organic compound moiety derived from an organic iodine compound as the polymerization initiator.

4. A living radical polymer composition comprising the living radical polymer according to any of claims 1 to 3 and a living radical polymer free of the terminal functional group structure, wherein the living radical polymer according to any of claims 1 to 3 is contained at a ratio of 50 parts by weight or more to 100 parts by weight in total of the living radical polymers.

5. A resin-coated pigment in which at least a portion of the surface is coated with a composition comprising the living radical polymer according to any of claims 1 to 3.

6. The resin-coated pigment according to claim 5, wherein the living radical polymer is a diblock copolymer comprising a hydrophilic block (A) comprising at least any one of a (meth)acrylic (co)polymer, a styrenic (co)polymer, and an aminic (co)polymer, and a hydrophobic block (B).

7. The resin-coated pigment according to claim 5 or 6, wherein the living radical polymer is an A-B-A type triblock copolymer that has the terminal functional group structure represented by the formula (1) or the formula (2) at both ends, and comprises a hydrophilic block (A) comprising at least any one of a (meth)acrylic (co)polymer, a styrenic (co)polymer, and an aminic (co)polymer, and a hydrophobic block (B).

8. The resin-coated pigment according to claim 6 or 7, wherein the hydrophilic block (A) is a (co)polymer comprising at least any one of a (meth)acrylate (co)polymer, a styrenic (co)polymer, and an aminic (co)polymer having a constituent unit derived from the same functional group as $R^1$ in the formula (1) or $R^5$ in the formula (2).

9. The resin-coated pigment according to any of claims 5 to 8, wherein the living radical polymer has a molecular weight of 1,000 to 50,000 and a molecular weight distribution value of 1.0 to 1.5.

10. A resin-coated pigment dispersion comprising the resin-coated pigment according to any of claims 5 to 9 as well as a medium consisting of at least any one member selected from water, an oil-soluble organic solvent, and a polymerizable compound.

11. An ink composition comprising the resin-coated pigment dispersion according to claim 10 and a binder resin.

12. An inkjet ink composition that is the ink composition according to claim 11 having a resin viscosity of 50 mPa·s or less at 25°C.

13. A method for producing the living radical polymer according to any of claims 1 to 3, comprising:

a polymerization step of forming a living radical polymer precursor using a polymerization initiator comprising an organic compound moiety and a dormant species, and a radical polymerizable unsaturated monomer; and
an introduction step of reacting a functional group-containing radical generator with a dormant species end derived from the dormant species of the precursor to introduce a terminal functional group structure derived from the functional group-containing radical generator in place of the dormant species end.

14. The method for producing the living radical polymer according to claim 13, wherein the functional group-containing radical generator is represented by any of the following formula (3) to formula (5):

[Chem. 3]

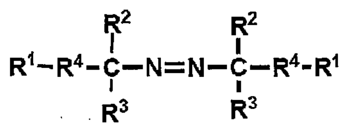

(3)

wherein

each $R^1$ is independently at least one functional group selected from a carboxyl group, a hydroxy group, and an amino group,
$R^2$ and $R^3$ are each independently at least one group selected from hydrogen, a $C_{1-3}$ alkyl group, and a cyano group, and
each $R^4$ is independently a $C_{1-3}$ alkylene group, an imino group, a N-alkylenecarboxylic acid amide moiety, or a N-alkylene amidine moiety,

[Chem. 4]

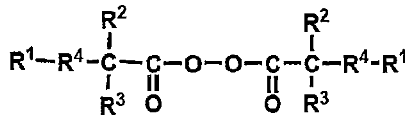

(4)

wherein

each $R^1$ is independently at least one functional group selected from a carboxyl group, a hydroxy group, and an amino group,

$R^2$ and $R^3$ are each independently at least one group selected from hydrogen, a $C_{1-3}$ alkyl group, and a cyano group, and

each $R^4$ is independently a $C_{1-3}$ alkylene group, an imino group, a N-alkylenecarboxylic acid amide moiety, or a N-alkylene amidine moiety,

[Chem. 5]

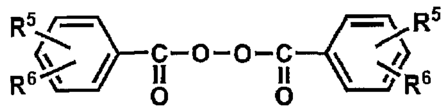

(5)

wherein

each $R^5$ is independently at least one functional group selected from a carboxyl group, a hydroxy group, and an amino group, and

each $R^6$ is independently one or two groups selected from hydrogen, a $C_{1-3}$ alkyl group, and a $C_{1-3}$ alkoxy group.

**15.** The method for producing the living radical polymer according to claim 13 or 14, wherein in the introduction step, a radical generator having a faster decomposition rate than that of the functional group-containing radical generator, and/or a nonmetallic compound having an ionic bond with an iodide ion is further used.

[Figure 1]

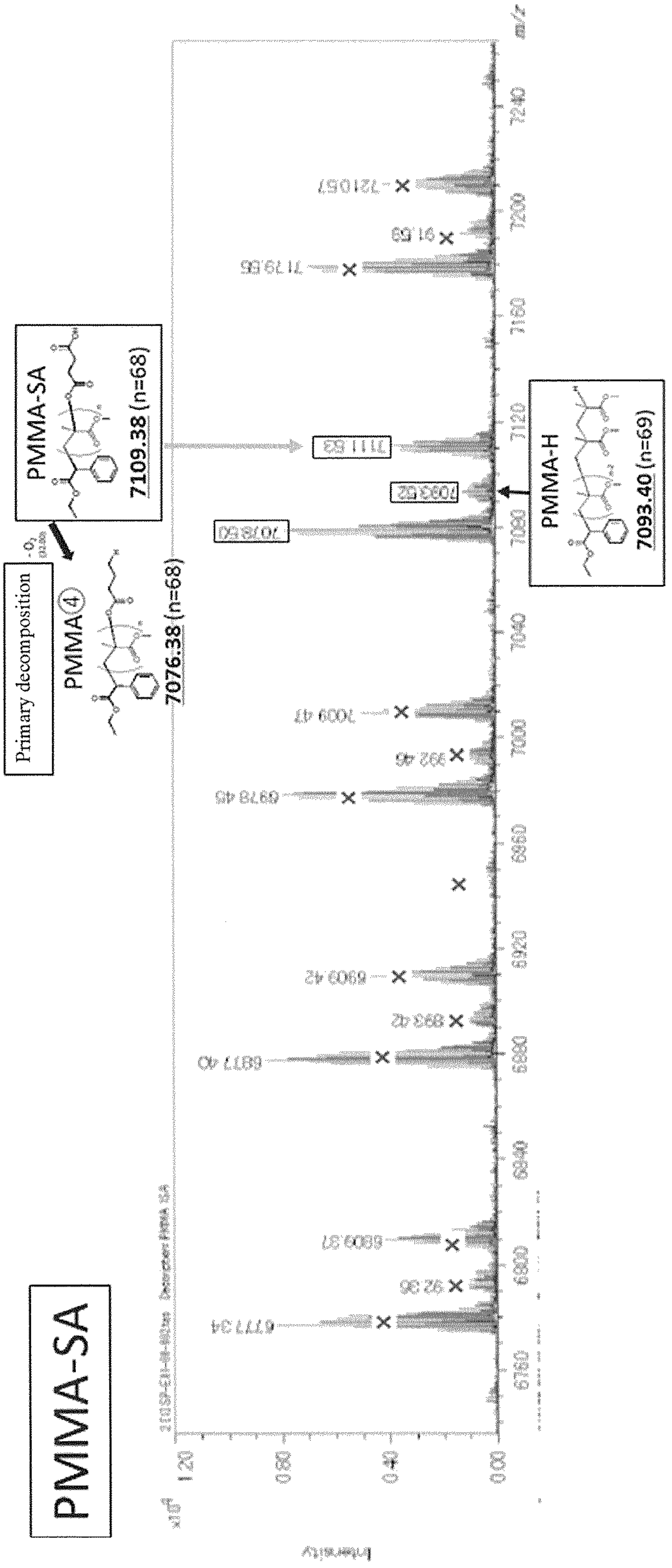
PMMA-SA
Primary decomposition
PMMA④
7076.38 (n=68)
PMMA-SA
7109.38 (n=68)
PMMA-H
7093.40 (n=69)
7078.50
7093.52
7111.63
6777.34
6809.37
6877.40
6909.42
6978.45
7009.47
7179.55
7210.57
Intensity
m/z

[Figure 2]

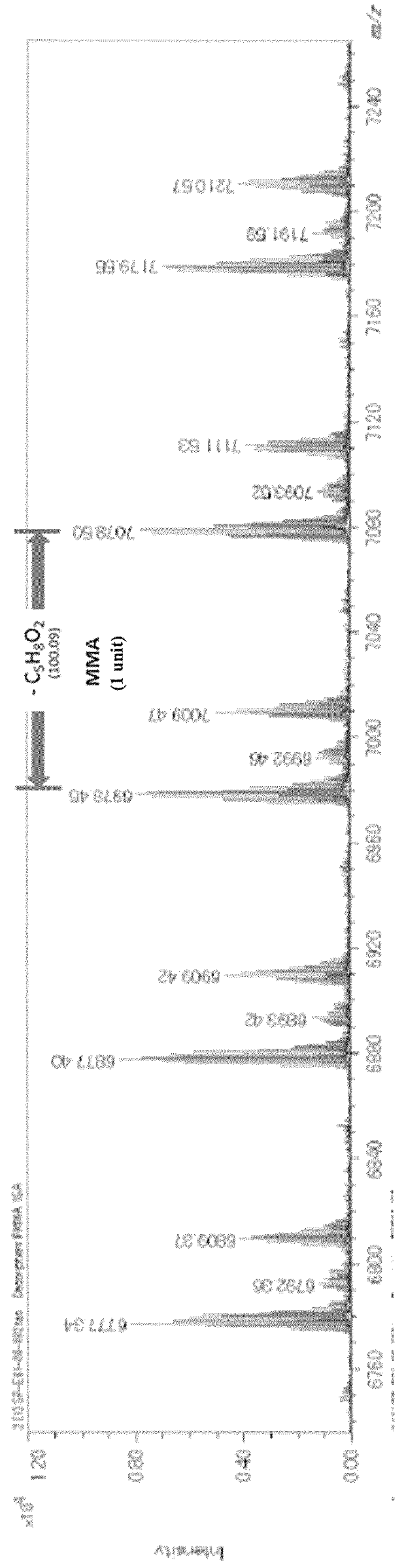
- $C_5H_8O_2$
(100.09)
MMA
(1 unit)
6777.34
6792.36
6809.37
6877.40
6893.42
6909.42
6978.45
6992.46
7009.47
7078.50
7093.52
7111.53
7179.55
7191.58
7210.57
m/z
Intensity

[Figure 3]

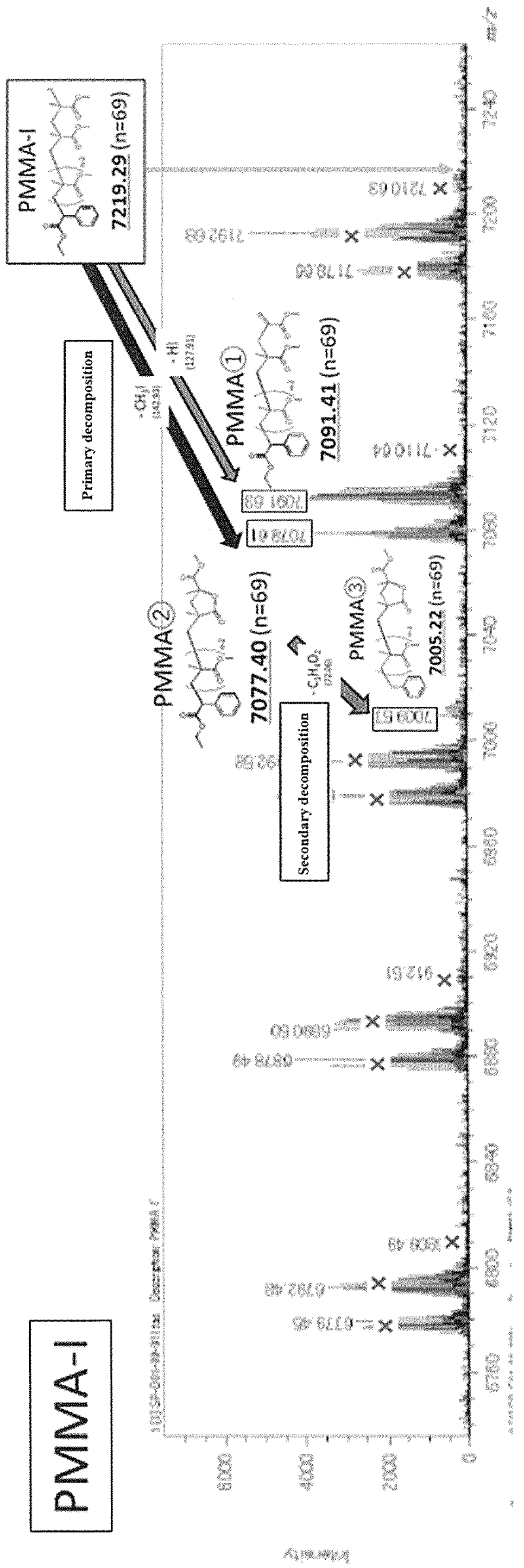
PMMA-I
PMMA-I
7219.29 (n=69)
Primary decomposition
Secondary decomposition
PMMA①
7091.41 (n=69)
PMMA②
7077.40 (n=69)
PMMA③
7005.22 (n=69)
Intensity
m/z

[Figure 4]

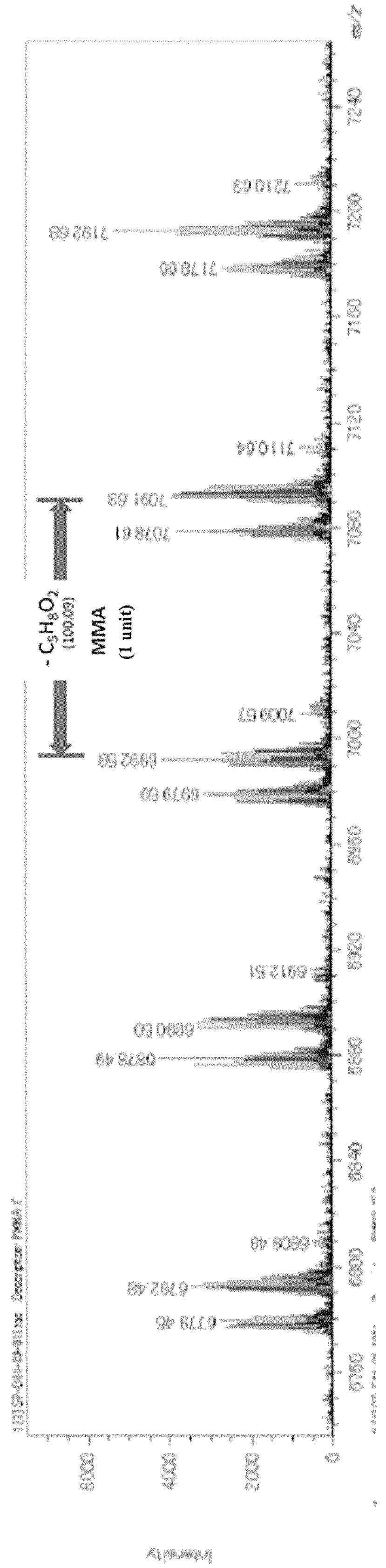
- $C_5H_8O_2$
(100.09)
MMA
(1 unit)
6779.46
6792.48
6809.49
6878.49
6890.50
6912.51
6979.59
6992.59
7009.57
7078.61
7091.63
7110.64
7178.66
7192.68
7210.63
m/z
Intensity

[Figure 5]

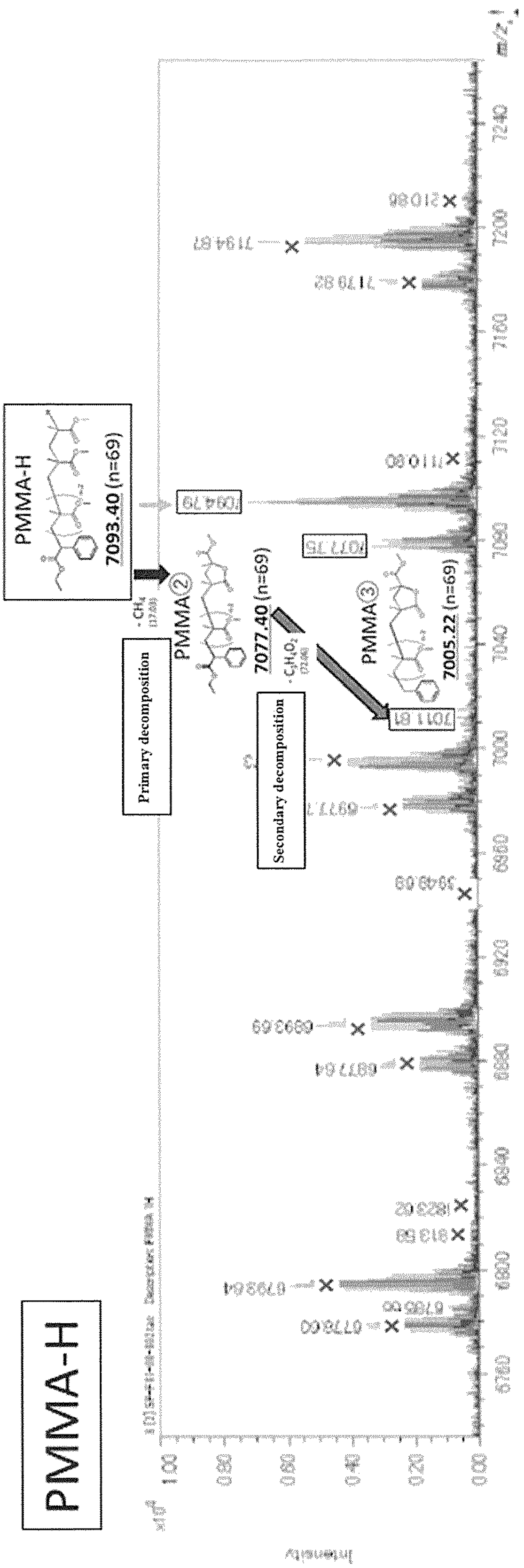
PMMA-H
PMMA-H
7093.40 (n=69)
Primary decomposition
PMMA②
7077.40 (n=69)
Secondary decomposition
PMMA③
7005.22 (n=69)
7094.79
7077.75
7011.81
Intensity
m/z

[Figure 6]

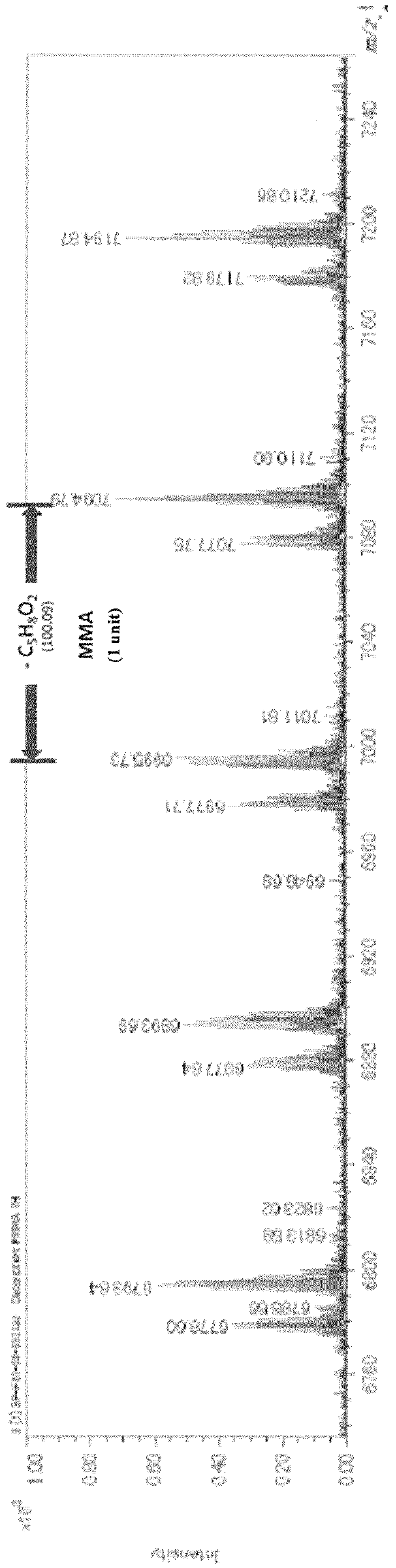
- $C_5H_8O_2$
(100.09)
MMA
(1 unit)
6778.60
6785.66
6793.64
6813.59
6823.62
6877.64
6893.69
6949.68
6977.71
6995.73
7011.81
7077.75
7094.79
7110.80
7179.82
7194.87
7210.86
Intensity
m/z

[Figure 7]

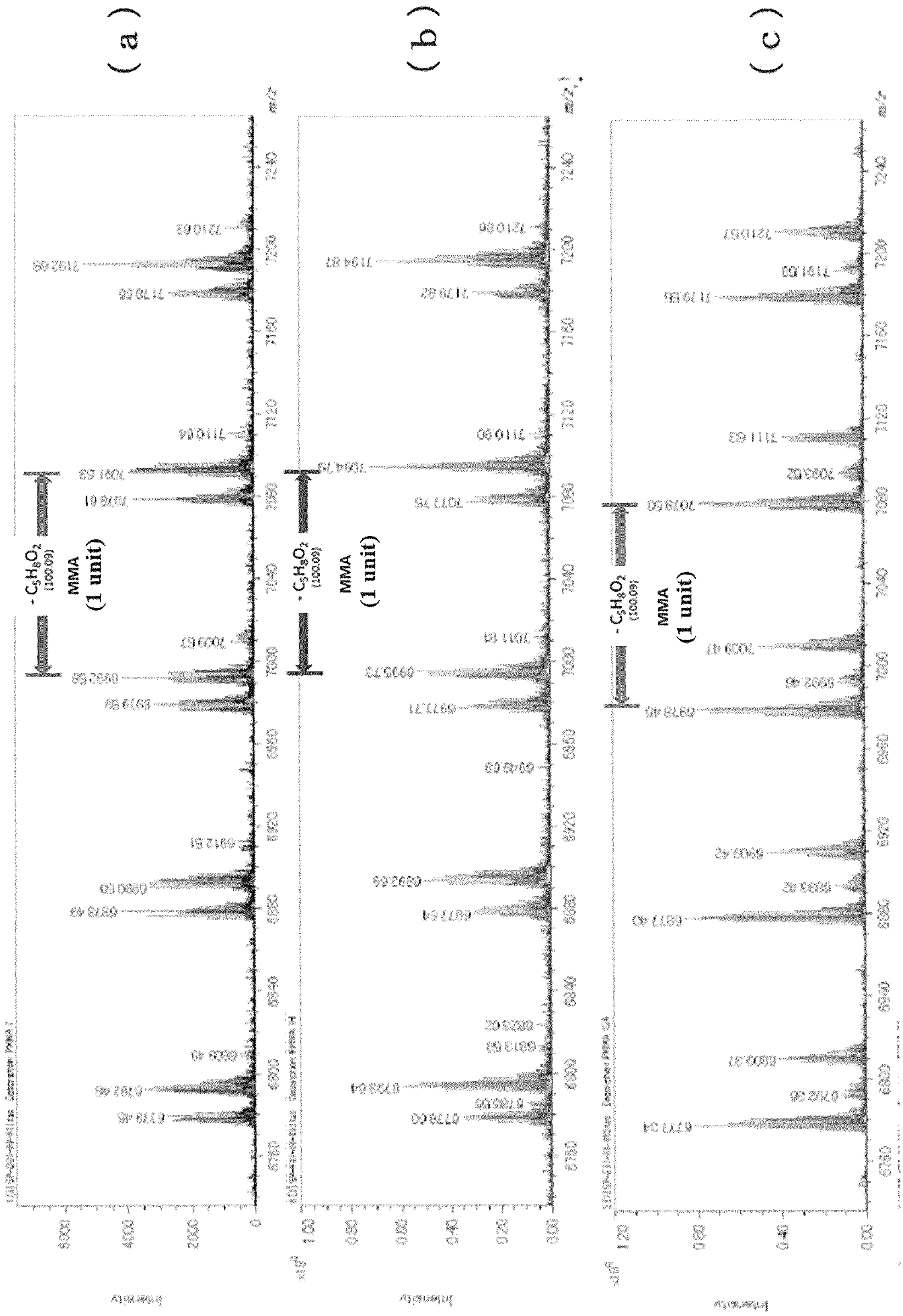

## INTERNATIONAL SEARCH REPORT

International application No. **PCT/JP2022/002275**

**A. CLASSIFICATION OF SUBJECT MATTER**

***C08F 8/00***(2006.01)i; ***C09C 3/10***(2006.01)i; ***C09D 17/00***(2006.01)i; ***C08F 4/00***(2006.01)i; ***C08L 33/00***(2006.01)i; ***C09D 11/322***(2014.01)i
FI: C09C3/10; C08L33/00; C08F4/00; C09D11/322; C09D17/00; C08F8/00

According to International Patent Classification (IPC) or to both national classification and IPC

**B. FIELDS SEARCHED**

Minimum documentation searched (classification system followed by classification symbols)

C08F8/00; C09C3/10; C09D17/00; C08F4/00; C08L33/00; C09D11/322

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-74326 A (TOAGOSEI CO., LTD.) 14 April 2011 (2011-04-14)<br>claims, paragraphs [0013]-[0015], [0133], [0134], [0173], [0189], [0222], examples | 1-4<br>5-15 |
| X | WO 2006/112420 A1 (KANEKA CORP.) 26 October 2006 (2006-10-26)<br>claims, paragraphs [0042], [0070], [0071], examples | 1-3 |
| X | JP 2000-154224 A (KANEGAFUCHI CHEMICAL INDUSTRY CO., LTD.) 06 June 2000 (2000-06-06)<br>claims, paragraphs [0020]-[0022], [0050], examples | 1-3 |
| A | JP 2000-198825 A (KANEGAFUCHI CHEMICAL INDUSTRY CO., LTD.) 18 July 2000 (2000-07-18)<br>entire text | 1-15 |
| A | JP 2019-137758 A (HITACHI CHEMICAL CO., LTD.) 22 August 2019 (2019-08-22)<br>entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 March 2022** | **05 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/002275**

| Patent document cited in search report | Publication date (day/month/year) | Patent family member(s) | Publication date (day/month/year) |
|---|---|---|---|
| JP 2011-74326 A | 14 April 2011 | (Family: none) | |
| WO 2006/112420 A1 | 26 October 2006 | US 2009/0082488 A1<br>claims, paragraphs [0051], [0089]-[0091], examples<br>EP 1873175 A1 | |
| JP 2000-154224 A | 06 June 2000 | EP 1138704 A1<br>claims, paragraphs [0024]-[0026], [0050], examples<br>CA 2342790 A<br>US 2003/0130437 A1<br>WO 2000/015683 A1 | |
| JP 2000-198825 A | 18 July 2000 | US 2003/0166786 A1<br>entire text<br>WO 1999/055751 A1<br>EP 992519 A1<br>CA 2294731 A | |
| JP 2019-137758 A | 22 August 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011074325 A
- JP 2013064092 A
- JP 2011225834 A
- JP 2016160308 A


### Non-patent literature cited in the description


- *Macromolecules, (USA),* vol. 2016 (49), 9425-9940
- Controlled Radical Polymerization Guide. Sigma-Aldrich Co, July 2012, 31-34
- Controlled Radical Polymerization Guide. Sigma-Aldrich Co, July 2012, 2-18
- Controlled Radical Polymerization Guide. Sigma-Aldrich Co, July 2012, 19-30
- Living Radical Polymerization 2. Polymerization Mechanism and Method 2. *Journal of the Society of Rubber Science and Technology, Japan,* August 2009, (82), 365-367
- Macromolecules. ACS Publications, September 2014, 6610-6618